# EUROPÄISCHE PATENTSCHRIFT

(11) **EP 3 077 966 B1**
(45) Veröffentlichungstag und Bekanntmachung des Hinweises auf die Patenterteilung: **09.02.2022**
(21) Anmeldenummer: 14811810.2
(22) Anmeldetag: 04.12.2014
(51) Int. Cl.: G06Q 10/08, G07C 9/00, H04W 4/80, H04W 12/082

(54) **AUSWAHL VON ZUGANGSKONTROLLVORRICHTUNGEN AUF EINER ZUGANGSBERECHTIGUNGSNACHWEISVORRICHTUNG BASIEREND AUF INFORMATION EINER SENDUNG**
SELECTION OF ACCESS CONTROL APPARATUSES ON AN ACCESS AUTHORISATION VERIFICATION APPARATUS ON THE BASIS OF INFORMATION FROM A SHIPMENT
SÉLECTION DE DISPOSITIFS DE CONTRÔLE D'ACCÈS SUR UN DISPOSITIF DE DÉTECTION D'AUTORISATION D'ACCÈS SUR LA BASE D'UNE INFORMATION D'UN ENVOI

(30) Priorität: 05.12.2013 DE 102013113554; 11.04.2014 DE 102014105247
(43) Veröffentlichungstag der Anmeldung: 12.10.2016
(73) Patentinhaber: Deutsche Post AG, 53113 Bonn (DE)
(72) Erfinder: BENZ, Ramin, 53229 Bonn (DE); BULYGIN, Stanislav, 70794 Filderstadt (DE); JANSEN, Jochen, 53113 Bonn (DE); DAUTZ, Christoph, 53225 Bonn (DE); CARSTENS, Christian, 53578 Windhagen (DE); LIPPERT, Marcus, 64319 Pfungstadt (DE)
(74) Vertreter: Cohausz & Florack
(86) Internationale Anmeldenummer: PCT/EP2014/076573
(87) Internationale Veröffentlichungsnummer: WO 2015/082617

(56) Entgegenhaltungen:
- GB-A- 2 352 314
- US-A1- 2003 079 129
- US-A1- 2008 004 995

## Beschreibung

### Gebiet

Beispielhafte Ausführungsformen der Erfindung betreffen eine Zugangsberechtigungsnachweisvorrichtung, auf der mehrere Zugangskontrollvorrichtungen und damit jeweils zusammenhängende Zugangsberechtigungsinformationen auswählbar sind, eine Vorrichtung zur Bereitstellung von Informationen an eine derartige Zugangsberechtigungsnachweisvorrichtung, ein System mit diesen Komponenten sowie die von diesen Komponenten ausgeführten Verfahren und deren Realisierung als Computerprogramme.

### Hintergrund

Zugangsberechtigungsnachweisvorrichtungen werden in Zugangskontrollsystemen eingesetzt, um nachzuweisen, dass eine Person oder ein Gerät berechtigt ist, an einer Zugangskontrollvorrichtung Zugang zu erhalten. Solche Zugangskontrollsysteme finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder -ressourcen oder Serverdiensten.

Eine spezifische Anwendung von Zugangskontrollsystemen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Auch eine Aufstellung einer Paketkastenanlage für mehrere Parteien eines Mehrfamilienhauses vor oder in einem Mehrfamilienhaus ist denkbar. Um Missbrauch und Diebstahl zu verhindern, muss der Paketkasten über ein Schloss verfügen. Sowohl der Zusteller als auch der Paketkastennutzer müssen dann mit physikalischen oder logischen Schlüsseln ausgestattet werden, um den Paketkasten benutzen zu können. Die logischen Schlüssel enthalten dann beispielsweise Zugangsberechtigungsinformation, die angeben, welcher Paketkasten in welchem Zeitintervall geöffnet werden darf und in welchem Umfang (nur eine Türe, mehrere Türen, etc.). Ein solches System ist in GB 2352314 offenbart.

### Zusammenfassung einiger beispielhafter Ausführungsformen der Erfindung

Wenn zur Öffnung jedes Paketkastens jeweilige Zugangsberechtigungsinformation erforderlich ist, müssen Zusteller über die jeweiligen Zugangsberechtigungsinformationen für sämtliche Paketkästen zumindest ihres Zustellbezirks verfügen. Zugangsberechtigungsinformationen können beispielsweise elektronisch auf einem Gerät des Zustellers, insbesondere einem Handscanner, gespeichert werden. Allerdings ergibt sich für den Zusteller dann das Problem, dass zur Öffnung eines Paketkastens die richtige Zugangsberechtigungsinformation aus einer Vielzahl von Zugangsberechtigungsinformation ausgewählt werden muss, was zeitaufwändig ist und damit den Zustellprozess verzögert.

Die vorliegende Erfindung hat sich daher die Aufgabe gestellt, dieses Problem zu überwinden. Die Erfindung ist im beigefügten Anspruchssatz definiert.

Gemäß einem ersten Aspekt der Erfindung wird ein Verfahren, durchgeführt durch eine Zugangsberechtigungsnachweisvorrichtung, offenbart, das folgendes umfasst:
- Erhalten einer Information einer Sendung,
- Identifizieren eines Sendungsdatensatzes aus einer Vielzahl von auf der Zugangsberechtigungsnachweisvorrichtung gespeicherten Sendungsdatensätzen unter Verwendung der erhaltenen Information der Sendung, wobei der Sendungsdatensatz mit der Sendung assoziierte Adressinformation umfasst,
- Bestimmen einer oder mehrerer Zugangskontrollvorrichtung(en) aus einer Vielzahl von Zugangskontrollvorrichtungen anhand eines Ergebnisses eines Vergleichs der Adressinformation des Sendungsdatensatzes mit jeweiliger mit den Zugangskontrollvorrichtungen assoziierter und auf der Zugangsberechtigungsnachweisvorrichtung gespeicherter Adressinformation und/oder mit mit einem oder mehreren Nutzer(n) der jeweiligen Zugangskontrollvorrichtung jeweils assoziierter und auf der Zugangsberechtigungsnachweisvorrichtung gespeicherter Adressinformation,
- Ermöglichen einer Auswahl und/oder einer Bestätigung einer Zugangskontrollvorrichtung der einen oder mehreren bestimmten Zugangskontrollvorrichtung(en) durch einen Benutzer der Zugangsberechtigungsnachweisvorrichtung, und
- Kommunizieren von mit der Zugangskontrollvorrichtung assoziierter Zugangsberechtigungsinformation an die Zugangskontrollvorrichtung, um Zugang zu einem der Zugangskontrollvorrichtung zugeordneten Raum zu verschaffen, so dass die Sendung in den Raum eingelegt oder aus diesem entnommen werden kann.

Gemäß dem ersten Aspekt der Erfindung wird ferner eine Verwendung einer Zugangsberechtigungsnachweisvorrichtung offenbart, die zur Ausführung des Verfahrens gemäß dem ersten Aspekt der Erfindung eingerichtet ist oder jeweilige Mittel zur Ausführung der Schritte des Verfahrens gemäß dem ersten Aspekt der Erfindung umfasst, die Verwendung umfassend:
- Handhabung der Zugangsberechtigungsnachweisvorrichtung, so dass die Information der Sendung von der Zugangsberechtigungsnachweisvorrichtung erhalten wird,
- Auswählen und/oder Bestätigen einer Zugangskontrollvorrichtung der einen oder mehreren von der Zugangsberechtigungsnachweisvorrichtung bestimmten Zugangskontrollvorrichtung(en), und
- Einlegen der Sendung in den der Zugangskontrollvorrichtung zugeordneten Raum oder Entnehmen der Sendung aus dem Raum, nachdem die Zugangsberechtigungsnachweisvorrichtung durch das Kommunizieren der Zugangsberechtigungsinformation an die Zugangskontrollvorrichtung Zugang zu dem Raum verschafft hat.

Gemäß einem zweiten Aspekt der Erfindung wird ein nicht beanspruchtes Verfahren offenbart, das folgendes umfasst:
- Bereitstellen der folgenden Informationen:
   - einer Vielzahl von Sendungsdatensätzen, wobei jeder der Sendungsdatensätze jeweilige Adressinformation einer jeweiligen Sendung umfasst,
   - mit Zugangskontrollvorrichtungen einer Vielzahl von Zugangskontrollvorrichtungen assoziierten jeweiligen Adressinformationen und/oder mit einem oder mehreren jeweiligen Nutzer(n) der Vielzahl von Zugangskontrollvorrichtungen assoziierten jeweiligen Adressinformationen, und
   - mit den Zugangskontrollvorrichtungen der Vielzahl von Zugangskontrollvorrichtungen assoziierten jeweiligen Zugangsberechtigungsinformationen.

Gemäß dem zweiten Aspekt der Erfindung wird ferner ein System, offenbart, das folgendes umfasst:
- eine oder mehrere Vorrichtungen, die eingerichtet sind zur Ausführung des Verfahrens gemäß dem zweiten Aspekt der Erfindung oder Mittel zur Ausführung der Schritte des Verfahrens gemäß dem zweiten Aspekt der Erfindung aufweisen.

Gemäß jedem dieser Aspekte der Erfindung werden des Weiteren jeweils offenbart:
- Ein Computerprogramm, umfassend Programmanweisungen, die einen Prozessor zur Ausführung des Verfahrens gemäß dem jeweiligen Aspekt der Erfindung veranlassen, wenn das Computerprogramm auf dem Prozessor läuft Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon.
- Eine Vorrichtung, eingerichtet zur Ausführung des Verfahrens gemäß dem jeweiligen Aspekt der Erfindung oder umfassend jeweilige Mittel zur Ausführung der Schritte des Verfahrens gemäß dem jeweiligen Aspekt der Erfindung. Ein oder mehrere der Mittel können auch durch die gleiche Einheit ausgeführt werden. Beispielsweise können ein oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, die Vorrichtung mit dem zumindest einen Prozessor dazu zu veranlassen, zumindest das Verfahren gemäß dem jeweiligen Aspekt der Erfindung auszuführen.

Gemäß einem dritten Aspekt der Erfindung wird ein System gemäß dem zweiten Aspekt der Erfindung offenbart, das ferner folgendes umfasst:
- eine Zugangsberechtigungsnachweisvorrichtung gemäß dem ersten Aspekt der Erfindung.

Der erste, zweite und dritte Aspekt der Erfindung findet beispielsweise Anwendung in einem System zur Zustellung und/oder Abholung von Sendungen.

Diese drei Aspekte der vorliegenden Erfindung weisen u.a. die nachfolgend beschriebenen - teilweise beispielhaften - Eigenschaften auf.

Bei der Zugangsberechtigungsnachweisvorrichtung kann es sich beispielsweise um ein tragbares elektronisches Gerät handeln. Das tragbare elektronische Gerät kann beispielsweise einem Zusteller zugeordnet sein und wird dann nachfolgend als "Zustellergerät" bezeichnet Das tragbare elektronische Gerät kann insbesondere ein Handscanner sein.

Das tragbare elektronische Gerät verfügt beispielsweise über eine graphische Benutzerschnittstelle und eine Funktionalität zur drahtlosen Erfassung von Information von Sendungen (z.B. Pakete oder Briefe), beispielsweise durch optisches Scannen von Sendungsetiketten und/oder Erfassen von Informationen von Sendungen über Funk (z.B. RFID) oder magnetische Felder (z.B. NFC), beispielsweise wenn das Paket einen RFID-Tag oder NFC-Tag aufweist Das tragbare elektronische Gerät kann beispielsweise die Fähigkeit aufweisen, über ein zellulares Mobilfunknetz zu kommunizieren, dies kann aber auch nicht der Fall sein. Das tragbare elektronische Gerät kann beispielsweise über die Fähigkeit verfügen, über WLAN und/oder über ein zellulares Mobilfunksystem (insbesondere über GRPS) zu kommunizieren. Das tragbare elektronische Gerät kann beispielsweise über die Fähigkeit verfügen, über Bluetooth und/oder NFC zu kommunizieren, beispielsweise auch durch entsprechende Nachrüstung. Wenn die Zugangsberechtigungsnachweisvorrichtung eingerichtet ist, mittels Bluetooth Zugangsberechtigungsinformation an die Zugangskontrollvorrichtung zu kommunizieren, ist es vorteilhaft, dass der Zugangsberechtigungsnachweisvorrichtung die Medium Access Control (MAC)-Adresse der Zugangskontrollvorrichtung bekannt ist, da dann die Bluetooth-Kommunikation ohne die Notwendigkeit des zeitaufwändigen Bluetooth-Pairings gestartet werden kann. Die MAC-Adresse der Zugangskontrollvorrichtung wird der Zugangsberechtigungsnachweisvorrichtung beispielsweise zusammen mit der Zugangsberechtigungsinformation mitgeteilt. Ein Beispiel für ein tragbares elektronisches Gerät, insbesondere ein Zustellergerät, ist ein Handscanner, z.B. der LXE Tecton MX7 der Firma Honeywell.

Eine Zugangskontrollvorrichtung weist beispielsweise einen oder mehrere Prozessoren auf, die eine oder mehrere Schließeinrichtungen, beispielsweise ein elektronisch ansteuerbares Schloss, steuern, und somit beispielsweise ein Öffnen und/oder Schließen des Schlosses bewirken können. Das Schloss kann beispielsweise mit einer Fallenfunktion ausgestattet sein, so dass die Zugangskontrollvorrichtung beispielsweise nur eine Öffnung des Schlosses (beispielsweise durch ein zumindest zeitweises Überführen der Falle in eine Offen-Stellung, beispielsweise durch einen elektrischen Motor) steuern muss, während ein Schließen des Schlosses manuell durch einen Nutzer geschieht, indem dieser die Fallenfunktion nutzt und beispielsweise durch Zudrücken einer Tür die Falle aus der Zu-Stellung in die Offen-Stellung verdrängt und nach dem Beenden des Zudrückens die Falle automatisch wieder in die Zu-Stellung zurückkehrt, beispielsweise durch Federvorbelastung. Die Zugangskontrollvorrichtung kann auch die Schließeinrichtungen und weitere Komponenten umfassen. Eine Zugangskontrollvorrichtung kann Bestandteil einer Vorrichtung sein, zu der sie den Zugang kontrolliert, beispielsweise einer Aufnahmevorrichtung, oder selbst eine Vorrichtung sein, zu dessen/deren Raum/Räumen sie den Zugang kontrolliert (beispielsweise ein Paketkasten). Die Zugangskontrollvorrichtung kann beispielsweise batteriebetrieben sein und beispielsweise über keinen insbesondere ständigen Stromanschluss verfügen. Die Zugangskontrollvorrichtung kann beispielsweise derart eingerichtet sein, dass sie im Betrieb ausschließlich zur Kommunikation mit Zugangsberechtigungsnachweisvorrichtungen eingerichtet ist, und beispielsweise nicht zur Kommunikation mit der Zugangsberechtigungserzeugungsvorrichtung eingerichtet ist. Die Zugangskontrollvorrichtung verfügt beispielsweise über keinen Anschluss an ein Mobilfunknetz, ein Local Area Network (LAN), ein Wireless Local Area Network (WLAN) oder das Internet, sie stellt damit also beispielsweise eine "offline"-Zugangskontrollvorrichtung dar. Die drahtlose Kommunikation der Zugangskontrollvorrichtung kann beispielsweise auf Kommunikation mit Vorrichtungen in der näheren Umgebung der Zugangskontrollvorrichtung (beispielsweise weniger als 100 m) eingerichtet sein. Die drahtlose Kommunikation der Zugangskontrollvorrichtung kann beispielsweise auf Kommunikation mittels Radio Frequency Identification (RFID) und/oder Near Field Communication (NFC) und/oder Bluetooth (z.B. Bluetooth Version 2.1 und/oder 4.0) beschränkt sein. RFID und NFCsind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich. Die Zugangskontrollvorrichtung kann nichtsdestotrotz beispielsweise über eine Universal Serial Bus (USB) Schnittstelle verfügen, über die die Zugangskontrollvorrichtung beispielsweise gewartet werden kann.

Eine Zugangskontrollvorrichtung führt beispielsweise eine Zugangskontrolle durch um zu entscheiden, ob aufgrund von Zugangsberechtigungsinformation, die von einer Zugangsberechtigungsnachweisvorrichtung erhalten wurde, Zugang (beispielsweise zu Räumen von Gebäuden oder Vorrichtungen) gewährt werden darf. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen, kombinierten Brief- und Paketkästen, Fahrzeugen (z.B. Kofferräumen) oder Schlüsselkästen (um an darin befindlichen Schlüssel zu gelangen), die beispielsweise jeweils mit Türen verschlossen und durch Schließeinrichtungen gesichert sind. Der Raum oder die Räume können auch in der Zugangskontrollvorrichtung gebildet sein. Es ist auch denkbar, dass in einem kombinierten Prozess zunächst der Zugang zu einem Raum eines Gebäudes (z.B. einem Treppenhaus oder Vorraum eines Mehrfamilienhauses) kontrolliert wird und dann der Zugang zu einer dort befindlichen Vorrichtung, beispielsweise einem Paketkasten oder einer Paketkastenanlage mit mehreren Paketkästen oder mit mehreren Paket- und/oder Brieffächern für unterschiedliche Empfängergruppen. Für beide Zugangsvorgänge kann beispielsweise die gleiche Zugangsberechtigungsinformation oder zumindest auf der gleichen Zugangsberechtigungsnachweisvorrichtung gespeicherte jeweilige Zugangsberechtigungsinformationen (z.B. eine für einer Tür zu dem Raum und eine andere für eine Tür eines Paketkastens oder einer Paketkastenanlage) verwendet werden.

Wenn entschieden wird, dass Zugang gewährt werden darf, wird beispielsweise Zugang gewährt, beispielsweise durch Absetzen eines Steuersignals, beispielsweise an ein Schloss, um beispielsweise eine Tür zu einem Raum oder mehreren Räumen zu entriegeln und/oder zu öffnen, um den Zugang zu dem/den einen oder mehreren Raum/Räumen zu ermöglichen. Der Zugang kann in unterschiedlichem Ausmaß gewährt werden, beispielsweise können bei Vorhandensein von mehreren Aufnahmeräumen lediglich Zugang zu bestimmten Aufnahmeräumen oder Gruppen von Aufnahmeräumen gewährt werden.

Die Zugangsberechtigungsinformation (die in dieser Spezifikation auch als Zugangsberechtigung bezeichnet wird) ist beispielsweise als Information zu verstehen, die im Rahmen einer durch die Zugangskontrollvorrichtung durchgeführten Prüfung, ob einer Entität Zugang gewährt werden darf, ausgewertet wird. Die Prüfung der Zugangsberechtigungsinformation muss nicht die einzige Prüfung im Rahmen der Zugangskontrolle sein, es können beispielsweise weitere notwendige Bedingungen erforderlich sein, damit Zugang gewährt werden darf. Beispiele für Zugangsberechtigungsinformation sind beispielsweise ein Code oder Schlüssel, der an die Zugangskontrollvorrichtung kommuniziert wird und mit einem in der Zugangskontrollvorrichtung hinterlegten Code oder Schlüssel verglichen wird, um bei Übereinstimmung zu entscheiden, dass Zugang gewährt werden darf. Der Code oder Schlüssel kann gegen Ausspähung zusätzlich gesichert sein, beispielsweise durch Verschlüsselung. Der Code oder Schlüssel kann beispielsweise dauerhaft verwendet werden, oder kann in regelmäßigen oder unregelmäßigen Abständen geändert werden. Beispielsweise kann nach einer vordefinierten Vorschrift nach zeitlichen Vorgaben (z.B. jeden Tag) oder bei jeder Benutzung eines Code ein neuer Code erzeugt werden. Dies kann sowohl in der Zugangskontrollvorrichtung als auch in der Zugangsberechtigungsnachweisvorrichtung erfolgen, damit beide jeweils korrespondierende Paare von Codes oder Schlüssel aufweisen, oder in der Zugangskontrollvorrichtung und in einer Einheit, von der die Zugangsberechtigungsnachweisvorrichtung den Code oder Schlüssel erhält.

Die Zugangsberechtigungsinformation ist jeweils mit einer Zugangskontrollvorrichtung assoziiert. Sie kann beispielsweise spezifisch (also individuell) für die jeweilige Zugangskontrollvorrichtung sein, so dass sich die Zugangsberechtigungsinformation für verschiedene Zugangskontrollvorrichtungen voneinander unterscheiden. Wenn die Zugangsberechtigungsnachweisvorrichtung beispielsweise jeweilige Zugangsberechtigungsinformationen zur Verschaffung von Zugang an mehreren Zugangskontrollvorrichtungen umfasst, muss aus diesen Zugangsberechtigungsinformationen zur Verschaffung von Zugang an einer bestimmten der Zugangskontrollvorrichtung die mit dieser Zugangskontrollvorrichtung assoziierte Zugangsberechtigungsinformation ausgewählt und dann an die Zugangskontrollvorrichtung übermittelt werden.

Ein Beispiel für Zugangsberechtigungsinformation ist in der EP 1 024 239 A1 beschrieben, in der die Zugangsberechtigungsinformation als Zugangstoken tij ausgebildet ist, der Zugangsrechte aij definiert, beispielsweise in der Form: "Gewähre Nutzer ui Zugang zu Schloss lj bis 1/2/2001". Die Zugangsrechte werden dann an ein Schloss übertragen und gegengeprüft. Es wird also beispielsweise geprüft, ob es sich um den Nutzer ui handelt, der den Zugangstoken vorlegt, ob der Zugangstoken für das Schloss lj gilt und ob der Gültigkeitszeitraum "bis 1/2/2001" des Schlosses noch nicht abgelaufen ist. Zusätzlich können die Zugangsrechte aij mit einem Nachrichtenauthentisierungscode (Message Authentication Code, MAC) versehen werden, beispielsweise ein HMAC nach Request for Comments (RFC) Dokument 2104. Der MAC basiert auf einem Schlüssel sj, der sowohl an einer Einheit, die den Zugangstoken erzeugt, als auch im Schloss bekannt ist. Der Zugangstoken tij umfasst dann den HMAC und die Zugangsrechte aij, beispielsweise konkateniert. Das Schloss kann dann anhand des empfangenen MACs, der empfangenen Zugangsrechte aij und des Schlüssels sj die Authentizität des Zugangstokens bestätigen und dann die Zugangsrechte aij prüfen. Alternativ können die Zugangsrechte gemäß der EP 1 024 239 A1 auch wie folgt definiert werden: "Gewähre dem Nutzer, der k kennt, Zugang zu Schloss lⱼ bis 1/1/2001". Der Nutzer muss dann sowohl über den Zugangstoken tᵢⱼ als auch über das Wissen über k (ein Schlüssel) verfügen, um Zugang am Schloss lⱼ zu erhalten, und bekommt beides (beispielsweise in verschlüsselter Form) von einer Einheit, die den Token erzeugt, zur Verfügung gestellt. In beiden Fällen ist die Zugangsberechtigungsinformation, also der Zugangstoken, spezifisch für das jeweilige Schloss lⱼ.

Die Zugangsberechtigungsinformation, die mit einer Zugangskontrollvorrichtung assoziiert ist (beispielsweise indem sie an dieser Zugangskontrollvorrichtung zum Zugang berechtigt), wird von der Zugangsberechtigungsnachweisvorrichtung an die Zugangskontrollvorrichtung kommuniziert. Dies kann beispielsweise über drahtlose Kommunikation geschehen, beispielsweise über Kommunikation mittels RFID, NFC oder Bluetooth. Ziel des Kommunizierens ist es, Zugang zu einem der Zugangskontrollvorrichtung zugeordneten Raum (z.B. einem Aufnahmeraum eines Paketkastens) zu verschaffen, damit eine Sendung in den Raum eingelegt oder aus diesem entnommen werden kann.

Zuvor muss diese Zugangsberechtigungsinformation allerdings aus einer Vielzahl von auf der Zugangsberechtigungsnachweisvorrichtung gespeicherten Zugangsberechtigungsinformationen, die jeweils mit unterschiedlichen Zugangskontrollvorrichtung einer Vielzahl von Zugangskontrollvorrichtungen assoziiert sind, ausgewählt werden. Um einem Benutzer der Zugangsberechtigungsnachweisvorrichtung (z.B. einem Zusteller) diese Auswahl zu erleichtern und damit den Prozess des Zugangs zu Zugangskontrollvorrichtungen zu beschleunigen, wird in der Zugangsberechtigungsnachweisvorrichtung ein insbesondere automatisches Bestimmen von einer oder mehreren Zugangskontrollvorrichtung(en) vorgenommen, die für eine vorliegende Sendung in Frage kommen. Der Benutzer der Zugangsberechtigungsnachweisvorrichtung muss nach diesem Bestimmen beispielsweise nur noch eine bestimmte Zugangskontrollvorrichtung bestätigen oder aus einer reduzierten Menge von einer oder mehreren Zugangskontrollvorrichtungen eine Zugangskontrollvorrichtung auswählen (und dann beispielsweise auch noch bestätigen). Die mit dieser bestätigten/ausgewählten Zugangskontrollvorrichtung assoziierte Zugangsberechtigungsinformation wird dann an diese Zugangskontrollvorrichtung kommuniziert, um dem Benutzer Zugang zu verschaffen.

Das Bestimmen der einen oder mehreren Zugangskontrollvorrichtungen beruht auf einem Vergleich der Adressinformation einer vorliegenden Sendung mit den jeweiligen Adressinformationen einer Vielzahl von Zugangskontrollvorrichtungen und/oder den jeweiligen Adressinformationen des/der jeweiligen Nutzer(s) der Vielzahl von Zugangskontrollvorrichtungen, beispielsweise von allen Zugangskontrollvorrichtungen und/oder von deren Nutzern, zu denen jeweils assoziierte Adressinformation auf der Zugangsberechtigungsnachweisvorrichtung gespeichert ist.

Diese jeweils mit einer Zugangskontrollvorrichtung assoziierte Adressinformation ist beispielsweise Adressinformation, die eine Adresse, an der die Zugangskontrollvorrichtung und/oder eine von der Zugangskontrollvorrichtung kontrollierte Vorrichtung (z.B. ein Paketkasten) positioniert ist, enthält oder für diese Adresse repräsentativ ist, beispielsweise in Form eines Codes. Dieser Code kann beispielsweise die sog. Leitinformation umfassen, die beispielsweise einen Code für die Postleitzahl (z.B. die Postleitzahl selbst), einen Code für die Straße und einen Code für die Hausnummer (z.B. die Hausnummer selbst) umfasst. Die Codierung dieser Codes kann dabei beispielsweise der Codierung der Adressinformation in dem unten noch genauer erläuterten Leitcode entsprechen, der für Sendungen genutzt wird.. Die Adresse kann beispielsweise eine Postleitzahl, eine Straße und/oder eine Hausnummer umfassen, optional kann auch eine Länderkennung und/oder weitere Informationen wie eine Wohnungsnummer oder eine Etagennummer enthalten sein. In der Adressinformation kann beispielsweise auch sowohl die Adresse als auch ein Code für die Adresse enthalten sein. Die Adresse und/oder der Code können für den Vergleich mit anderer Adressinformation herangezogen werden. Die jeweils mit einer Zugangskontrollvorrichtung assoziierte Adresse ist beispielsweise in einem jeweiligen Zugangskontrollvorrichtungsdatensatz enthalten, der beispielsweise auch die jeweilige Zugangsberechtigungsinformation für die jeweilige Zugangskontrollvorrichtung enthalten kann sowie weitere Informationen, wie z.B. eine Kennung der Zugangskontrollvorrichtung oder einer ihr zugeordneten Vorrichtung (z.B. eines Paketkastens) oder einer ihrer Komponenten.

Die mit einem Nutzer einer Zugangskontrollvorrichtung assoziierte Adressinformation umfasst beispielsweise die Adresse des Wohnorts oder Geschäftssitzes des Nutzers und/oder eine dafür repräsentative Information (z.B. einen Code, insbesondere eine Leitinformation, die bereits oben erläutert wurde). Diese Adressinformation kann beispielsweise in einem Nutzerdatensatz enthalten sein, der mit einer Zugangskontrollvorrichtung assoziiert sein kann, beispielsweise dadurch, dass er eine Kennung der Zugangskontrollvorrichtung (oder einer von ihr kontrollierten Vorrichtung, wie z.B. einem Paketkasten) aufweist. Die Berücksichtigung der Adressinformation des/der Nutzer(s) der Zugangskontrollvorrichtungen trägt der Tatsache Rechnung, dass sich mehrere Nutzer beispielsweise aus der gleichen Nachbarschaft eine Zugangskontrollvorrichtung, z.B. einen Paketkasten, teilen können und dann die Adresse eines Nutzers nicht notwendigerweise mit der Adresse der Zugangskontrollvorrichtung übereinstimmen muss.

In ähnlicher Weise ist eine Sendung (z.B. ein Paket, ein Päckchen oder ein Brief) mit einer Adressinformation assoziiert, die eine Adresse oder eine für diese Adresse repräsentative Information umfasst, an die die Sendung zugestellt werden soll oder von der diese Sendung abgeholt werden soll. Die Adressinformation kann beispielsweise einen Leitcode umfassen (beispielsweise zusätzlich zur eigentlichen Adresse) oder aus diesem bestehen. Ein Leitcode umfasst beispielsweise 14 Stellen, von denen die Stellen 1-5 die Postleitzahl, die Stellen 6-8 einen Straßencode, die Stellen 9-11 die Hausnummer, die Stellen 12-13 einen Produktcode und die Stelle 14 eine Prüfziffer enthält. Die mit der Sendung assoziierte Adressinformation ist in einem Sendungsdatensatz enthalten, der für die Sendung beispielsweise spezifisch ist. Der Sendungsdatensatz kann beispielsweise weitere Informationen enthalten, insbesondere den Namen (z.B. Vorname und Nachname) des Empfängers oder Absenders der Sendung. Der Sendungsdatensatz kann ferner eine insbesondere eindeutige Kennung für die Sendung enthalten, beispielsweise einen Identcode, der beispielsweise auch für Zwecke der Sendungsverfolgung genutzt werden kann. Der Identcode kann beispielsweise 12 Stellen umfassen und folgende Informationen codieren: Stellen 1-2: das Abgangsfrachtpostzentrum, Stellen 3-5: die Kundenkennung, Stellen 6-11: eine Einlieferungsnummer, Stelle 12: eine Prüfziffer. Allerdings sind auch abweichende Definitionen des Identcodes denkbar.

Durch Vergleichen der mit der Sendung assoziierten Adressinformation mit den jeweils mit den Zugangskontrollvorrichtungen der Vielzahl von Zugangskontrollvorrichtungen assoziierten Adressinformationen und/oder mit den jeweils mit dem/den jeweiligen Nutzer(n) der Vielzahl von Zugangskontrollvorrichtungen assoziierten Adressinformationen wird eine Menge von einer oder mehreren Zugangskontrollvorrichtungen bestimmt, wobei beispielsweise ein vordefinierter Grad an Übereinstimmung erforderlich ist, damit eine Zugangskontrollvorrichtung als zu der Menge gehörig bestimmt wird. Beispielsweise enthält diese Menge alle die Zugangskontrollvorrichtungen, deren assoziierte Adressinformation (und/oder die Adressinformation von deren Nutzer(n)) zumindest hinsichtlich der Postleitzahl und der Straße mit der mit der Sendung assoziierten Adressinformation übereinstimmen, oder deren assoziierte Adressinformation (und/oder die Adressinformation von deren Nutzer(n)) vollkommen (z.B. hinsichtlich Postleitzahl, Straße und Hausnummer) mit der mit der Sendung assoziierten Adressinformation übereinstimmen. Wie bereits erwähnt kann dabei entweder unmittelbar anhand der mit einer Zugangskontrollvorrichtung assoziierten Adressinformation auf eine Zugangskontrollvorrichtung geschlossen werden, oder anhand der mit einem Nutzer assoziierten Adressinformation mittelbar auf eine Zugangskontrollvorrichtung, die mit diesem Nutzer assoziiert ist, geschlossen werden. Das Vergleichen kann anhand der in den jeweiligen Adressinformationen enthaltenen Adressen und/oder den darin enthaltenen Codes durchgeführt werden. Es können also beispielsweise Codes miteinander verglichen werden oder Adressen, oder Codes und Adressen. Dabei kann der Vergleich basierend auf Codes beispielsweise effizienter sein.

Der Vergleich der mit der Sendung assoziierten Adressinformation mit den jeweiligen mit den Zugangskontrollvorrichtung assoziierten Adressinformationen (und/oder mit den jeweiligen mit dem/den jeweiligen Nutzer(n) der Zugangskontrollvorrichtung assoziierten Adressinformation) setzt voraus, dass die Adressinformation der Sendung bekannt ist. Dazu speichert die Zugangsberechtigungsnachweisvorrichtung eine Vielzahl von Sendungsdatensätzen, die jeweils einer Sendung zugeordnet sind und die Adressinformation der Sendung umfassen. Es handelt sich dabei beispielsweise um Sendungsdatensätze für alle Sendungen, die ein Benutzer der Zugangsberechtigungsnachweisvorrichtung in einem vordefinierten Zeitintervall (beispielsweise an einem Tag) zustellen und/oder abholen muss. Der für eine vorliegende Sendung relevante Sendungsdatensatz wird an der Zugangsberechtigungsnachweisvorrichtung anhand von Informationen einer Sendung identifiziert. Diese Informationen können insbesondere durch drahtlose Erfassung mit der Zugangsberechtigungsnachweisvorrichtung von der Sendung, beispielsweise optisch von einem Sendungsetikett, erfasst worden sein, beispielsweise durch Einscannen eines Barcodes (z.B. eines 1D- oder 2D-Barcodes). Alternativ ist auch eine Erfassung über Funk und/oder über elektrische oder magnetische Felder möglich, wenn die Sendung mit entsprechenden Informationselementen (z.B. RFID- oder NFC-Tags) ausgestattet ist. Als weitere Alternative kann die Information der Sendung auch über eine Tastatur (beispielsweise eine Hardware- oder Softwaretastatur) der Zugangsberechtigungsnachweisvorrichtung vom Benutzer der Zugangsberechtigungsnachweisvorrichtung eingegeben und dadurch von der Zugangsberechtigungsnachweisvorrichtung erhalten werden. Die so an der Zugangsberechtigungsnachweisvorrichtung erhaltene Information der Sendung (beispielsweise eine Kennung oder ein Code für die Sendung, insbesondere ein Identcode) werden dann zur Identifizierung des richtigen Sendungsdatensatzes genutzt, beispielsweise durch Vergleich mit einer entsprechenden in den jeweiligen Datensätzen enthaltenen Information (z.B. einer Kennung oder einem Code, insbesondere einem Identcode) der Sendung. Wenn der richtige Sendungsdatensatz identifiziert wurde, liegt auch die darin enthaltene mit der Sendung assoziierte Adressinformation vor als Grundlage des Vergleichs mit den Adressinformationen der Zugangskontrollvorrichtungen bzw. der Adressinformation von deren Nutzer(n).

Durch diese Vorgehensweise wird also der Umfang der Auswahl von Zugangskontrollvorrichtung, aus denen ein Benutzer der Zugangskontrollvorrichtung eine Zugangskontrollvorrichtung auswählen muss, um mit der Zugangskontrollvorrichtung assoziierte Zugangsberechtigungsinformation an die Zugangskontrollvorrichtung kommunizieren und an dieser Zugang erhalten zu können, erheblich reduziert. Im Idealfall muss der Benutzer lediglich dafür sorgen, dass die Zugangsberechtigungsnachweisvorrichtung die Information der Sendung erhält, z.B. durch Einscannen, und muss dann lediglich eine angezeigte Zugangskontrollvorrichtung bestätigen oder aus einigen wenigen Zugangskontrollvorrichtungen eine auswählen (und beispielsweise auch noch bestätigen). Die Bestätigung und/oder Auswahl kann dann unmittelbar zum Kommunizieren der Zugangsberechtigungsinformation an die Zugangskontrollvorrichtung führen. Alternativ kann die Zugangsberechtigungsnachweisvorrichtung auch in einem Modus zur Bereitschaft für das Kommunizieren der Zugangsberechtigungsinformation versetzt werden, wobei die Zugangsberechtigungsinformation erst dann kommuniziert wird, wenn ein Kommunikationsmodul der Zugangskontrollvorrichtung aufgeweckt wurde, beispielsweise durch einen Näherungssensor der Zugangskontrollvorrichtung. Dann muss die Zugangsberechtigungsnachweisvorrichtung beispielsweise in die Nähe des Sensors der Zugangsberechtigungsnachweisvorrichtung gebracht werden, um deren Kommunikationsmodul aufzuwecken, und sobald das Kommunikationsmodul aufgeweckt ist, kann das Kommunizieren der Zugangsberechtigungsinformation an die Zugangskontrollvorrichtung stattfinden.

Voraussetzung für die erfindungsgemäße Reduzierung der Anzahl von Zugangskontrollvorrichtungen, aus denen ein Benutzer auswählen muss, wenn er Zugang zu einer bestimmten Zugangskontrollvorrichtung zum Einstellen oder Abholen einer Sendung erhalten will, ist das Vorhandensein von entsprechenden Sendungsdatensätzen und Zugangskontrollvorrichtungsdatensätzen (mit darin enthaltenen Zugangsberechtigungsinformationen und Adressinformationen) auf der Zugangsberechtigungsnachweisvorrichtung erforderlich, damit die darin jeweils enthaltenen Adressen miteinander verglichen werden können. Deshalb werden gemäß dem zweiten Aspekt diese Informationen für die Zugangsberechtigungsnachweisvorrichtung bereitgestellt.

Das Bereitstellen kann beispielsweise von einem oder mehreren Servern durchgeführt werden, der/die nachfolgend summarisch als Bereitstellungsserver bezeichnet wird/werden. Der Bereitstellungsserver kann die jeweiligen Informationen von jeweiligen Datenquellen erhalten und/oder zumindest teilweise selbst erzeugen. Eine Datenquelle für die Zugangsberechtigungsinformation ist beispielsweise eine Zugangsberechtigungserzeugungsvorrichtung, z.B. ein Schlüsselserver. Die Sendungsdatensätze können beispielsweise an dem Bereitstellungsserver von einem Sendungsverwaltungssystem erhalten werden. Die Adressinformationen der Zugangskontrollvorrichtungen und ihrer Nutzer können beispielsweise von einem Zugangskontrollvorrichtungs-Verwaltungssystem erhalten werden. Der Bereitstellungsserver erhält diese Informationen beispielsweise für alle in einem vordefinierten Zeitraum (z.B. einem Tag od. einer Woche) zuzustellenden oder abzuholenden Sendungen, und beispielsweise für alle Zugangskontrollvorrichtungen eines Zustellunternehmens. Der Bereitstellungsserver kann diese Informationen nun sämtlich zur jeweiligen Nutzung durch jede Zugangsberechtigungsnachweisvorrichtung bereitstellen, oder jeweils beispielsweise nur eine Untermenge dieser Informationen, wie nachfolgend noch genauer ausgeführt werden wird. Die Reduzierung der Menge von zur Nutzung durch jeweilige Zugangsberechtigungsnachweisvorrichtungen bereitgestellten Informationen hat den Vorteil, dass weniger Speicherplatz auf den Zugangsberechtigungsnachweisvorrichtungen erforderlich ist und insbesondere der Umfang der Auswahl an Zugangskontrollvorrichtung, aus denen ein jeweiliger Benutzer der Zugangsberechtigungsnachweisvorrichtung auswählen muss, erheblich reduziert wird. Zudem werden die Möglichkeiten des Missbrauchs mit einer gestohlenen oder verlorenen Zugangsberechtigungsnachweisvorrichtung reduziert, da mit jeder Zugangsberechtigungsnachweisvorrichtung Zugang nur noch zu einer jeweiligen Untermenge der insgesamt vorhandenen Zugangskontrollvorrichtungen erhalten werden kann und mithin die Sicherheit erhöht wird. Diese Vorgehensweise ergänzt sich also mit der oben geschilderten Reduzierung der Auswahlmenge, wie sie auf den Zugangsberechtigungsnachweisvorrichtungen dann selbst durchgeführt wird. Die bereitgestellten Informationen können beispielsweise direkt oder indirekt an die jeweiligen Zugangsberechtigungsnachweisvorrichtungen zur Nutzung kommuniziert werden. Beispielsweise können die Informationen über ein Netzwerk (wie beispielsweise das Internet) an einen Computer oder Server übertragen werden, der dann die Übertragung der Informationen auf eine oder mehrere Zugangsberechtigungsnachweisvorrichtungen übernimmt, beispielsweise durch drahtlose Übertragung (z.B. via Wireless Local Area Network, WLAN, oder über eine Mobilfunkverbindung, beispielsweise über eine General Packet Radio Service (GPRS) Verbindung) oder mittels einer seriellen Verbindung (beispielsweise zu einer Dockingstation, mit der die Zugangsberechtigungsnachweisvorrichtung zumindest zeitweise verbunden ist). Im Zeitpunkt des Bereitstellens kann beispielsweise noch nicht feststehen, welche Zugangsberechtigungsnachweisvorrichtung die bereitgestellten Informationen erhalten wird. Beispielsweise werden die Informationen für unterschiedliche Zustellbezirke bereitgestellt und dann auf die jeweilige Zugangsberechtigungsnachweisvorrichtung übertragen, wenn eine Assoziation zwischen der jeweiligen Zugangsberechtigungsnachweisvorrichtung und einem jeweiligen Zustellbezirk hergestellt wird, beispielsweise durch Anmeldung einer Zugangsberechtigungsnachweisvorrichtung für einen Zustellbezirk.

Weitere Vorteile der vorliegenden Erfindung werden nachfolgend anhand beispielhafter Ausführungsformen beschrieben, deren Offenbarung für alle drei Aspekte der Erfindung und alle jeweiligen Kategorien (Verfahren, Vorrichtung/System, Computerprogramm) gleichermaßen gelten soll.

In einer beispielhaften Ausführungsform aller Aspekte der Erfindung speichert die Zugangsberechtigungsnachweisvorrichtung jeweils unterschiedliche Zugangsberechtigungsinformation für jede Zugangskontrollvorrichtung der Vielzahl von Zugangskontrollvorrichtungen. Die Unterschiedlichkeit der Zugangsberechtigungsinformationen kann beispielsweise die Ursache dafür sein, dass für jede Zugangskontrollvorrichtung, zu der Zugang erlangt werden soll, die Vorlage einer jeweils für diese Zugangskontrollvorrichtung spezifischen Zugangsberechtigungsinformation erforderlich ist.

In einer beispielhaften Ausführungsform aller Aspekte der Erfindung wird das Bestimmen (und beispielsweise die weiteren von dem Bestimmen abhängenden Aktionen) nur durchgeführt, wenn durch die Zugangsberechtigungsnachweisvorrichtung festgestellt wurde, dass für die Sendung ein gültiger Leitcode vorhanden ist. Dieser Leitcode kann beispielsweise entweder aus dem identifizierten Sendungsdatensatz stammen oder ebenfalls beispielsweise durch Scannen von einem Etikett der Sendung oder durch Eingeben in die Zugangsberechtigungsnachweisvorrichtung durch den Benutzer der Zugangsberechtigungsnachweisvorrichtung erhalten worden sein. Ein gültiger Leitcode liegt beispielweise vor, wenn dieser Informationen zur Postleitzahl, Straße und Hausnummer einer Sendung umfasst (und beispielsweise zusätzlich eine Prüfziffer korrekt und/oder eine Produktinformation (gemäß der Ziffern 12-13 des Leitcodes) vorhanden ist). Falls festgestellt wird, dass kein gültiger Leitcode vorliegt, könnte das Bestimmen (und beispielsweise die weiteren von dem Bestimmen abhängenden Aktionen) beispielsweise dennoch ausgeführt werden, z.B. wenn festgestellt wird, dass zwar entweder kein Leitcode oder nur ein Leitcode mit einem vordefinierten Straßencode (z.B. "444"), der beispielsweise einen fiktiven Leitcode definiert, vorliegt, aber zumindest für eine Zugangskontrollvorrichtung und/oder für zumindest einen Nutzer einer Zugangskontrollvorrichtung Information auf der Zugangsberechtigungsnachweisvorrichtung vorhanden ist, beispielsweise mit diesem Nutzer und/oder dessen assoziierter Zugangskontrollvorrichtung assoziierte Adressinformation und/oder Zugangsberechtigungsinformation für die mit diesem Nutzer assoziierte Zugangskontrollvorrichtung.

In einer beispielhaften Ausführungsform aller Aspekte der Erfindung wird das Bestimmen (und beispielsweise die weiteren von dem Bestimmen abhängenden Aktionen) nur durchgeführt, wenn von Informationen (z.B. eines Produkt- und/oder Servicecodes) des identifizierten Sendungsdatensatzes festgestellt wird, dass die Sendung in den von der Zugangskontrollvorrichtung kontrollierten Raum eingelegt oder aus diesem abgeholt werden darf.

In einer beispielhaften Ausführungsform aller Aspekte der Erfindung wird die Auswahl der einen Zugangskontrollvorrichtung der einen oder mehreren bestimmten Zugangskontrollvorrichtung(en) ermöglicht, falls mehr als eine Zugangskontrollvorrichtung bestimmt wurden. Das Bestimmen der einen oder mehreren Zugangskontrollvorrichtungen hat also in diesem Fall keine Eindeutigkeit feststellen können, beispielsweise weil in der Adressinformation der Sendung keine Hausnummer enthalten ist und zu der Postleitzahl und Straße mehrere Zugangskontrollvorrichtungen existieren. Dann muss der Benutzer der Zugangsberechtigungsnachweisvorrichtung letztendlich die Entscheidung treffen, welcher der verbleibenden Zugangskontrollvorrichtung die richtige ist, beispielsweise durch Vergleich eines mit der Sendung assoziierten Namens (z.B. des Sendungsempfängers oder der Person, die die Abholung einer Sendung beauftragt hat) mit einem oder mehreren Namen von Nutzern, die der/den einen oder mehreren bestimmten Zugangskontrollvorrichtung(en) zugeordnet sind.

Beispielsweise kann ein Dialog (beispielsweise über eine graphische Benutzerschnittstelle der Zugangsberechtigungsnachweisvorrichtung) zur Auswahl einer Zugangskontrollvorrichtung aus der/den bestimmten Zugangskontrollvorrichtungen bereitgestellt werden, wenn ein Vergleich der Adressinformation des Sendungsdatensatzes mit jeweiliger mit den Zugangskontrollvorrichtungen der Vielzahl von Zugangskontrollvorrichtungen assoziierter und auf der Zugangsberechtigungsnachweisvorrichtung gespeicherter Adressinformation und/oder mit jeweiliger mit dem/den Nutzer(n) der jeweiligen Zugangskontrollvorrichtung assoziierter und auf der Zugangsberechtigungsnachweisvorrichtung gespeicherter Adressinformation hinsichtlich zumindest zwei Zugangskontrollvorrichtungen der Vielzahl von Zugangskontrollvorrichtungen einen vordefinierten Grad an Übereinstimmung ergibt.

In einer beispielhaften Ausführungsform aller Aspekte der Erfindung wird die Bestätigung der Zugangskontrollvorrichtung der einen oder mehreren bestimmten Zugangskontrollvorrichtung(en) ermöglicht, falls nur die Zugangskontrollvorrichtung bestimmt wurde und/oder nachdem die Zugangskontrollvorrichtung durch den Benutzer der Zugangsberechtigungsnachweisvorrichtung aus der/den einen oder mehreren bestimmten Zugangskontrollvorrichtung(en) ausgewählt wurde. Beispielsweise wird nur eine Zugangskontrollvorrichtung bestimmt, wenn eine vollständige Übereinstimmung der Adressinformation der Sendung mit der Adressinformation der Zugangskontrollvorrichtung und/oder der Adressinformation eines Nutzers der Zugangskontrollvorrichtung vorliegt, also z.B. hinsichtlich Postleitzahl, Straße und Adresse. Dann kann beispielsweise zu Kontrollzwecken Information zu der bestimmten Zugangskontrollvorrichtung, insbesondere zu den ihr zugeordneten Nutzern, angezeigt werden, damit der Benutzer der Zugangsberechtigungsnachweisvorrichtung eine mit der Sendung assoziierte Person mit den Nutzern der Zugangskontrollvorrichtung abgleichen und bei Übereinstimmung die Zugangskontrollvorrichtung bestätigen kann. Das Bestätigen kann das vorherige Auswählen eines der Benutzer der Zugangskontrollvorrichtung beinhalten und/oder erfordern.

Beispielsweise kann ein Dialog (beispielsweise über eine graphische Benutzerschnittstelle der Zugangsberechtigungsnachweisvorrichtung) zur Bestätigung einer Zugangskontrollvorrichtung aus der/den bestimmten Zugangskontrollvorrichtung(en) durch einen Benutzer der Zugangsberechtigungsnachweisvorrichtung bereitgestellt werden, wenn ein Vergleich der Adressinformation des Sendungsdatensatzes mit Adressinformation, die mit der Zugangskontrollvorrichtung und/oder mindestens einem Nutzer der Zugangskontrollvorrichtung assoziiert ist, einen vordefinierten Grad an Übereinstimmung ergibt und dieser Grad an Übereinstimmung nur für diese eine Zugangskontrollvorrichtung aus der Vielzahl von Zugangskontrollvorrichtungen und/oder den mindestens einen Nutzer dieser Zugangskontrollvorrichtung auftritt.

Das Ermöglichen der Auswahl und/oder der Bestätigung kann beispielsweise nach Anwahl einer Menüoption durch den Benutzer der Zugangsberechtigungsnachweisvorrichtung erfolgen, die (beispielsweise nur dann) vorhanden ist, wenn zumindest eine Zugangskontrollvorrichtung anhand des Vergleichs, wie oben erläutert, bestimmt wurde. Zusätzlich oder alternativ kann diese Menüoption (beispielsweise nur dann) vorhanden sein, wenn zwar keine gültige Adressinformation der Sendung - insbesondere kein gültiger Leitcode der Sendung - vorliegt, aber Adressinformation für zumindest eine Zugangskontrollvorrichtung oder zumindest einen Nutzer einer Zugangskontrollvorrichtung auf der Zugangsberechtigungsnachweisvorrichtung gespeichert ist.

In einer beispielhaften Ausführungsform aller Aspekte der Erfindung nimmt eine Anzahl der einen oder mehreren bestimmten Zugangskontrollvorrichtung(en) mit zunehmendem Grad an Übereinstimmung zwischen der Adressinformation des Sendungsdatensatzes und den mit den Zugangskontrollvorrichtungen und/oder deren Nutzern jeweils assoziierten Adressinformationen ab, insbesondere so dass lediglich eine Zugangskontrollvorrichtung bestimmt wird, wenn die mit dieser Zugangskontrollvorrichtung und/oder deren Nutzer(n) assoziierte Adressinformation vollständig mit der Adressinformation des Sendungsdatensatzes übereinstimmt. Wenn beispielsweise nur eine Übereinstimmung in der Postleitzahl gefordert wird, führt dies in der Regel zu einer größeren Anzahl von bestimmten Zugangskontrollvorrichtung als in einem Szenario, in dem eine Übereinstimmung in der Postleitzahl und der Straße gefordert wird bzw. als in einem Szenario, in dem eine Übereinstimmung in Postleitzahl, Straße und Hausnummer gefordert wird. Der Grad der Übereinstimmung kann wie bereits erwähnt vordefiniert sein und beispielsweise den jeweiligen Bedürfnissen angepasst sein. Beispielsweise kann ein Nutzer der Zugangsberechtigungsnachweisvorrichtung einen hohen Grad an Übereinstimmung bevorzugen, um lediglich aus eine kleiner Menge von bestimmten Zugangskontrollvorrichtung auswählen zu müssen.

In einer beispielhaften Ausführungsform aller Aspekte der Erfindung wird ein Hinweis auf die Möglichkeit zur Nutzung einer Zugangskontrollvorrichtung ausgegeben, wenn die Adressinformation des Sendungsdatensatzes einen vordefinierten Grad an Übereinstimmung mit zumindest einer mit einer Zugangskontrollvorrichtung assoziierten Adressinformation und/oder mit zumindest einer mit einem Nutzer einer Zugangskontrollvorrichtung assoziierten Adressinformation aufweist. Der vordefinierte Grad an Übereinstimmung kann beispielsweise eine vollständige Übereinstimmung sein, z.B. eine Übereinstimmung in der Postleitzahl, Straße und Hausnummer. Bei diesem hohen Grad an Übereinstimmung ist es vorteilhaft, den Nutzer der Zugangsberechtigungsnachweisvorrichtung in jedem Fall auf die Möglichkeit der Nutzung einer Zugangskontrollvorrichtung für die vorliegende Sendung hinzuweisen, um ihm einen in der Regel zeitaufwändigeren alternativen Zustellprozess zu ersparen. Die Ausgabe des Hinweises findet beispielsweise nur dann statt, wenn zusätzlich durch die Zugangsberechtigungsnachweisvorrichtung festgestellt wurde, dass die Information der Sendung gültig ist. Wenn die Information der Sendung beispielsweise ein Leitcode ist, kann beispielsweise von einer Gültigkeit des Leitcodes ausgegangen werden, wenn dieser Informationen zur Postleitzahl, Straße und Hausnummer einer Sendung umfasst (und beispielsweise zusätzlich eine Prüfziffer korrekt und/oder eine Produktinformation (gemäß der Ziffern 12-13 des Leitcodes) vorhanden ist).

In einer beispielhaften Ausführungsform aller Aspekte der Erfindung umfasst das Erhalten der Information der Sendung das drahtlose, insbesondere optische Erfassen der Information der Sendung durch die Zugangsberechtigungsnachweisvorrichtung. Das optische Erfassen kann beispielsweise mit einer internen oder externen Scanvorrichtung der Zugangsberechtigungsnachweisvorrichtung erfolgen, insbesondere wenn diese als Handscanner ausgebildet ist. Die Scanvorrichtung kann beispielsweise einen sichtbaren Code auf einer Sendung (z.B. auf deren Etikett) erfassen und erkennen (z.B. durch Optical Character Recognition (OCR)), so dass dieser in elektronischer Form vorhanden ist und von der Zugangsberechtigungsnachweisvorrichtung weiter verarbeitet werden kann. Bei dem Code kann es sich um einen Barcode handeln, beispielsweise um einen 1D- od. 2D-Barcode. Der Code kann auch eine alphanumerische Zeichenfolge sein, die beispielsweise maschinengeschrieben oder handgeschrieben ist. Alternativ kann die Erfassung über Funk oder über elektrische oder magnetische Felder erfolgen, beispielsweise mittels Radio Frequency Identification (RFID) oder Near Field Communication (NFC), insbesondere wenn die Sendung mit einem entsprechend auf die Sendung (z.B. deren Kennung) programmierten RFID- oder NFC-Tag versehen ist.

In einer beispielhaften Ausführungsform aller Aspekte der Erfindung umfasst das Erhalten der Information der Sendung das Erfassen einer Eingabe der Information der Sendung durch einen Benutzer der Zugangsberechtigungsnachweisvorrichtung mittels einer Benutzerschnittstelle der Zugangsberechtigungsnachweisvorrichtung. Die Information der Sendung wird dann dadurch von der Zugangsberechtigungsnachweisvorrichtung erhalten, dass der Benutzer der Zugangsberechtigungsnachweisvorrichtung oder eine andere Person diese Information in die Zugangsberechtigungsnachweisvorrichtung eingibt, beispielsweise mittels einer Tastatur (die beispielsweise auf einem Touchscreen dargestellt ist ("soft keys") oder mit physikalischen Tasten ("hard keys") realisiert sein kann.) Die Information der Sendung ist beispielsweise in Klarschrift auf der Sendung aufgebracht.

In einer beispielhaften Ausführungsform aller Aspekte der Erfindung umfasst das Erhalten der Information der Sendung das Auswählen oder Anwählen der auf der Zugangsberechtigungsnachweisvorrichtung gespeicherten Information der Sendung durch einen Benutzer der Zugangsberechtigungsnachweisvorrichtung. Die Information der Sendung kann also auch bereits in der Zugangsberechtigungsnachweisvorrichtung gespeichert sein, beispielsweise als Liste von abzuholenden Sendungen. Der Benutzer der Zugangsberechtigungsnachweisvorrichtung wählt dann beispielsweise aus dieser Liste einen Eintrag aus, was dazu führt, dass die Zugangsberechtigungsnachweisvorrichtung Information über die somit ausgewählte Sendung erhält und ihr einen Sendungsdatensatz zuordnen kann.

In einer beispielhaften Ausführungsform aller Aspekte der Erfindung umfassen die Sendungsdatensätze nur Sendungsdatensätze von Sendungen, die einem Benutzer der Zugangsberechtigungsnachweisvorrichtung in einem vordefinierten Zeitraum zugeordnet sind. Insbesondere werden dabei von der Zugangsberechtigungsnachweisvorrichtung keine Sendungsdatensätze für Sendungen gespeichert (und beispielsweise auch nicht erhalten), die dem Benutzer der Zugangsberechtigungsnachweisvorrichtung nicht in dem vordefinierten Zeitraum zugeordnet sind. Wie bereits ausgeführt kann dadurch der Speicherbedarf auf der Zugangsberechtigungsnachweisvorrichtung gering gehalten werden und auch der Prozess der Identifizierung des Sendungsdatensatzes weniger komplex gestaltet werden, da weniger Sendungsdatensätze durchsucht werden müssen.

In einer beispielhaften Ausführungsform aller Aspekte der Erfindung umfasst die jeweilige mit den Zugangskontrollvorrichtungen assoziierte und auf der Zugangsberechtigungsnachweisvorrichtung gespeicherte Adressinformation und/oder die mit einem oder mehreren Nutzer(n) (7) der jeweiligen Zugangskontrollvorrichtung jeweils assoziierte und auf der Zugangsberechtigungsnachweisvorrichtung (3) gespeicherte Adressinformation nur jeweils mit solchen Zugangskontrollvorrichtungen assoziierte Adressinformation und/oder nur mit jeweils einem oder mehreren Nutzer(n) (7) von solchen Zugangskontrollvorrichtungen jeweils assoziierte Adressinformation, bei denen die jeweilige Adressinformation und/oder die jeweilige Adressinformation ihrer jeweiligen ein oder mehreren Nutzer gemäß einem vordefinierten Grad an Übereinstimmung mit der Adressinformation zumindest einer der gespeicherten Sendungsdatensätze übereinstimmt.

Die kommunizierte Zugangsberechtigungsinformation kann dann beispielsweise aus einer Vielzahl von auf der Zugangsberechtigungsnachweisvorrichtung gespeicherten Zugangsberechtigungsinformationen stammen, wobei diese Zugangsberechtigungsinformationen nur Zugangsberechtigungsinformationen von denjenigen Zugangskontrollvorrichtungen, bei denen die jeweilige Adressinformation und/oder die jeweilige Adressinformation ihrer jeweiligen ein oder mehreren Nutzer gemäß einem vordefinierten Grad an Übereinstimmung mit der Adressinformation zumindest einer der gespeicherten Sendungsdatensätze übereinstimmt.

Beispielsweise wird also nur Adressinformation von solchen Zugangskontrollvorrichtungen und/oder Adressinformation von den Nutzern solcher Zugangskontrollvorrichtungen gespeichert (und beispielsweise an der Zugangsberechtigungsnachweisvorrichtung erhalten), die mit dem Benutzer der Zugangsberechtigungsnachweisvorrichtung assoziiert sind. Die Assoziation zwischen der Zugangskontrollvorrichtung und dem Benutzer der Zugangsberechtigungsnachweisvorrichtung kann insbesondere darin bestehen, dass die Adressinformation der Zugangskontrollvorrichtung und/oder die Adressinformation zumindest eines Nutzers der Zugangskontrollvorrichtung gemäß einem vordefinierten Grad an Übereinstimmung mit der Adressinformation zumindest eines Sendungsdatensatzes der gespeicherten Sendungsdatensätze übereinstimmt. In diesem Fall ist beispielsweise sowohl der Sendungsdatensatz als auch die Zugangskontrollvorrichtung dem Benutzer der Zugangsberechtigungsnachweisvorrichtung zugeordnet. Dies kann beispielsweise im Rahmen eines Bezirksschneidungsprozesses geschehen (als möglicher Bestandteil des zweiten Aspekts der Erfindung), in dem den mit den Sendungsdatensätzen assoziierten Sendungen jeweils ein Zustellbezirk zugeordnet wird und dann geprüft wird, welche Zugangskontrollvorrichtungen diesem Bezirk zugeordnet werden können. Es werden dann beispielsweise nur die Sendungsdatensätze von einem Zustellungsbezirk zugeordneten Sendungen und die Informationen (Zugangsberechtigungsinformation zu Zugangskontrollvorrichtungen; Adressinformationen der Zugangskontrollvorrichtungen und/oder Adressinformationen der Nutzer der Zugangskontrollvorrichtungen) der diesem Zustellbezirk zugeordneten Zugangskontrollvorrichtungen an die Zugangsberechtigungsnachweisvorrichtung übertragen und dort gespeichert, beispielsweise wenn ein Benutzer der Zugangsberechtigungsnachweisvorrichtung sich für diesen Zustellbezirk registriert.

Es kann dann beispielsweise der Fall auftreten, dass eine erste Sendung einem Zustellbezirk A und eine zweite Sendung einem Zustellbezirk B zugeordnet wird, wobei die Empfänger der ersten Sendung für eine Zugangskontrollvorrichtung im Zustellbezirk A registriert sind. Aufgrund der ersten Sendung werden für die Zugangsberechtigungsnachweisvorrichtung des Zustellbezirks A dann die Zugangsberechtigungsinformationen und die Adressinformation für die Zugangskontrollvorrichtung und die Adressinformation für die Nutzer der Zugangskontrollvorrichtung (also des Empfängers der ersten Sendung und des Empfängers der zweiten Sendung) bereitgestellt (aufgrund der Übereinstimmung der Sendungsadressinformation mit der Zugangskontrollvorrichtungsadressinformation und der Adressinformation des Empfängers der ersten Sendung). Aufgrund der zweiten Sendung werden an die Zugangsberechtigungsnachweisvorrichtung des Zustellbezirks B dann ebenfalls die Zugangsberechtigungsinformationen und die Adressinformation für die Zugangskontrollvorrichtung und die Adressinformation für die Nutzer der Zugangskontrollvorrichtung (also des Empfängers der ersten Sendung und des Empfängers der zweiten Sendung) bereitgestellt (aufgrund der Übereinstimmung der Sendungsadressinformation mit der Adressinformation des Empfängers der zweiten Sendung).

Durch diese Vorfilterung von an die Zugangsberechtigungsnachweisvorrichtung übertragener und dort gespeicherter Information, die beispielsweise durch einen Bereitstellungsserver durchgeführt wird, wird zum einen der Speicherbedarf auf den Zugangsberechtigungsnachweisvorrichtungen als auch der Rechenaufwand des Prozesses des Bestimmens der einen oder mehreren Zugangskontrollvorrichtung(en) auf der Zugangsberechtigungsnachweisvorrichtung möglichst gering gehalten, da nur die Adressinformation der dem Benutzer der Zugangsberechtigungsnachweisvorrichtung zugeordneten Zugangskontrollvorrichtungen (und/oder die Adressinformation von deren Nutzer(n)) mit den Adressinformationen der Sendung (deren Sendungsdatensatz identifiziert wurde) abgeglichen werden muss, aber nicht die Adressinformation aller Zugangskontrollvorrichtungen und/oder von deren Nutzern. Zusätzlich wird die Sicherheit erhöht, da auf den Zugangsberechtigungsnachweisvorrichtung dann nur Zugangsberechtigungsinformationen für eine geringere Anzahl von Zugangskontrollvorrichtungen vorhanden ist und damit im Falle einer verlorenen oder gestohlenen Zugangsberechtigungsnachweisvorrichtung Missbrauch mit weniger Zugangskontrollvorrichtungen möglich ist.

In einer beispielhaften Ausführungsform aller Aspekte der Erfindung ist die mit der jeweiligen Zugangskontrollvorrichtung assoziierte Zugangsberechtigungsinformation in einem jeweiligen Zugangskontrollvorrichtungsdatensatz für die jeweilige Zugangskontrollvorrichtung enthalten. Beispielsweise wird die Zugangsberechtigungsinformation an die Zugangsberechtigungsnachweisvorrichtung dann in solchen Zugangskontrollvorrichtungsdatensätzen kommuniziert (beispielsweise von einem Bereitstellungsserver) und dort gespeichert. Der jeweilige Zugangskontrollvorrichtungsdatensatz kann dann beispielsweise auch die mit der jeweiligen Zugangskontrollvorrichtung assoziierte Adressinformation umfassen, und beispielsweise auch weitere Parameter, wie z.B. eine Kennung der Zugangskontrollvorrichtung oder von einer Komponente davon oder von einer Vorrichtung, die von der Zugangskontrollvorrichtung kontrolliert wird.

In einer beispielhaften Ausführungsform aller Aspekte der Erfindung ist eine mit einem jeweiligen Nutzer einer jeweiligen Zugangskontrollvorrichtung assoziierte jeweilige Adressinformation und eine jeweilige Kennung der jeweiligen Zugangskontrollvorrichtung in einem jeweiligen Nutzerdatensatz enthalten. Beispielsweise werden die Adressinformationen der Nutzer der Zugangskontrollvorrichtung in derartigen Nutzerdatensätzen an die Zugangsberechtigungsnachweisvorrichtung kommuniziert und dort gespeichert. Die Nutzerdatensätze sind dann insbesondere über die Kennung der jeweiligen Zugangskontrollvorrichtung mit dieser jeweiligen Zugangskontrollvorrichtung assoziiert.

Es werden an der Zugangsberechtigungsnachweisvorrichtung dann insbesondere nur Nutzerdatensätze für den/die Nutzer derjenigen Zugangskontrollvorrichtungen erhalten, für die auch Zugangskontrollvorrichtungsdatensätze erhalten werden.

Es können beispielsweise entweder nur Adressinformationen (z.B. in Nutzerdatensätzen) desjenigen Nutzers einer Zugangskontrollvorrichtung erhalten werden, der in dem vordefinierten Zeitraum auch tatsächlich mit einer Sendung assoziiert ist (diese also beispielsweise erhalten soll oder zur Abholung beauftragt hat), oder jeweils die Adressinformationen aller Nutzer von Zugangskontrollvorrichtungen, die in dem vordefinierten Zeitraum dem Benutzer der Zugangsberechtigungsnachweisvorrichtung zugeordnet sind (insbesondere weil in dem vordefinierten Zeitraum eine Sendung in die jeweilige Zugangskontrollvorrichtung zugestellt oder aus dieser abgeholt werden soll), auch wenn diese teilweise in dem vordefinierten Zeitraum nicht mit einer Sendung assoziiert sind. Die erste der beiden genannten Varianten erfordert weniger Speicherplatz auf der Zugangsberechtigungsnachweisvorrichtung und verbraucht auch weniger Rechenleistung im Prozess des Bestimmens, da weniger Adressinformationen von Nutzern mit den Adressinformationen der Sendung abgeglichen werden müssen. Die zweite Variante erlaubt dem Benutzer der Zugangskontrollvorrichtung allerdings einen besseren Überblick über die einer Zugangskontrollvorrichtung zugeordneten Nutzer, was vor Ort gfs. ein Vorteil sein kann. Im Bereitstellungsserver kann bei der Bereitstellung der Informationen für eine Zugangsberechtigungsnachweisvorrichtung beispielsweise so vorgegangen werden, dass zunächst Sendungen einem Zustellbezirk zugeordnet werden und dann für jede Sendung anhand deren Adressinformation (insbesondere deren Leitcode, und gfs. auch der Namensinformation, also Vorname und Nachname oder nur Nachname) ermittelt wird, welchem Nutzer einer Zugangskontrollvorrichtung diese Sendung zugeordnet ist. Anhand des Adressinformation des Nutzers (z.B. aus dessen Nutzerdatensatz) wird dann festgestellt, welche Zugangskontrollvorrichtung diesem Nutzer zugeordnet ist. Dann wird entweder der Sendungsdatensatz der Sendung, der Zugangskontrollvorrichtungsdatensatz der Zugangskontrollvorrichtung und die Adressinformation des Nutzers (z.B. deren Nutzerdatensatz), oder der Sendungsdatensatz, der Zugangskontrollvorrichtungsdatensatz und die jeweiligen Adressinformationen aller Nutzer (z.B. deren Nutzerdatensätze), die dieser Zugangskontrollvorrichtung zugeordnet sind, der/den Zugangsberechtigungsnachweisvorrichtungen dieses Zustellbezirks bereitgestellt. Dies wird dann beispielsweise für alle Sendungen eines Zustellbezirks wiederholt.

In einer beispielhaften Ausführungsform aller Aspekte der Erfindung ist zumindest auf zwei Zugangsberechtigungsnachweisvorrichtungen jeweils die gleiche mit einer Zugangskontrollvorrichtung assoziierte Zugangsberechtigungsinformation gespeichert. Es können beispielsweise auch jeweilige Zugangsberechtigungsinformationen für mehrere Zugangskontrollvorrichtungen auf den beiden oder auf weiteren Zugangsberechtigungsnachweisvorrichtungen identisch gespeichert sein. Dies kann beispielsweise erlauben, dass die Benutzer der zumindest zwei Zugangsberechtigungsnachweisvorrichtungen jeweils Zugang zu der gleichen Zugangskontrollvorrichtung erlangen können, beispielsweise zur Zustellung und/oder Abholung von mehreren Sendungen in einem vordefinierten Zeitraum (z.B. einem Tag).

In einer beispielhaften Ausführungsform aller Aspekte der Erfindung kann die Zugangsberechtigungsinformation nur an die Zugangskontrollvorrichtung kommuniziert werden, falls ein vordefinierter Grad an Übereinstimmung zwischen der Adressinformation der Sendungsdaten und der mit der Zugangskontrollvorrichtung assoziierten Adressinformation und/oder der mit dem /den Nutzer(n) der Zugangskontrollvorrichtung assoziierten Adressinformation besteht. Diese Forderung wird beispielsweise durch die Zugangsberechtigungsnachweisvorrichtung durchgesetzt, beispielsweise indem für das Bestimmen ein vordefinierter Grad an Übereinstimmung gefordert wird (beispielsweise zumindest Übereinstimmung in der Postleitzahl und Straße) und ein Kommunizieren von Zugangsberechtigungsinformation an eine Zugangskontrollvorrichtung nur möglich ist, wenn diese aus der/den bestimmten einen oder mehreren Zugangskontrollvorrichtungen vom Benutzer der Zugangsberechtigungsnachweisvorrichtung ausgewählt und/oder bestätigt wurde.

Diese Forderung dient insbesondere der Vermeidung von missbräuchlichem Einsatz einer Zugangsberechtigungsnachweisvorrichtung, beispielsweise für den Fall, dass eine Zugangsberechtigungsnachweisvorrichtung verloren oder gestohlen wurde und Zugangsberechtigungsinformation für mehrere Zugangskontrollvorrichtungen enthält, die zumindest teilweise auch auf anderen Zugangsberechtigungsnachweisvorrichtungen vorhanden ist (wie in der vorigen beispielhaften Ausführungsform). Zum Sperren der verlorenen/gestohlenen Zugangsberechtigungsnachweisvorrichtung (beispielsweise anhand einer Kennung der Zugangsberechtigungsinformation) kann beispielsweise an den betroffenen Zugangskontrollvorrichtungen, für die die Zugangsberechtigungsnachweisvorrichtung Zugangsberechtigungsinformation umfasste, diese Zugangsberechtigungsinformation gesperrt werden. Dies führt allerdings dazu, dass gfs. auch andere Zugangsberechtigungsnachweisvorrichtungen, die die jeweilige Zugangsberechtigungsinformation umfassen, während der Sperrung keinen Zugang zu der jeweiligen Zugangskontrollvorrichtung mehr verschaffen könnten. Als vorteilhafte alternative oder zusätzliche Variante wird gemäß der vorliegenden beispielhaften Ausführungsform der Erfindung durch die Begrenzung der Nutzungsmöglichkeit jeder Zugangsberechtigungsnachweisvorrichtung nur für diejenigen Zugangskontrollvorrichtungen, für die auch tatsächlich eine Sendung vorliegt (dies wird anhand der erhaltenen (z.B. insbesondere von der Sendung eingescannten) Information der Sendung gegenüber der Zugangsberechtigungsnachweisvorrichtung nachgewiesen), derartiger Missbrauch, also beispielsweise das Verschaffen von Zugang an Zugangskontrollvorrichtungen, für die keine Sendung vorliegt, um beispielsweise darin befindliche Sendungen zu stehlen, wirksam unterbunden.

In einer beispielhaften Ausführungsform aller Aspekte der Erfindung erfolgt das Kommunizieren von Information (insbesondere der Zugangsberechtigungsinformation) von der Zugangsberechtigungsnachweisvorrichtung an die Zugangskontrollvorrichtung drahtlos, insbesondere mittels Bluetooth-Kommunikation. Die Bluetooth-Kommunikation kann beispielsweise ohne Bluetooth-Pairing auskommen, weil der Zugangsberechtigungsnachweisvorrichtung die MAC-Adresse der Zugangskontrollvorrichtung bekannt gemacht wurde. Beispielsweise ist die jeweilige MAC-Adresse der Zugangskontrollvorrichtung in dem Zugangskontrollvorrichtungsdatensatz enthalten, der auch die Zugangsberechtigungsinformation und die Adressinformation für die jeweilige Zugangskontrollvorrichtung enthält.

Die oben beschriebenen, zunächst grundsätzlich für sich alleine stehenden Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1:: eine schematische Darstellung einer beispielhaften Ausführungsform eines Systems gemäß der vorliegenden Erfindung,
- Fig. 2:: eine schematische Darstellung einer beispielshaften Ausführungsform einer Vorrichtung gemäß der vorliegenden Erfindung,
- Fig. 3:: ein Flussdiagramm einer beispielhaften Ausführungsform eines Verfahrens gemäß dem zweiten Aspekt der vorliegenden Erfindung;
- Fig.4a/b:: ein Flussdiagramm einer beispielhaften Ausführungsform eines Verfahrens gemäß dem ersten Aspekt der vorliegenden Erfindung;
- Fig. 5a-f:: schematische Darstellungen von beispielhaften Bildschirmanzeigen auf einer Zugangsberechtigungsnachweisvorrichtung gemäß der vorliegenden Erfindung.

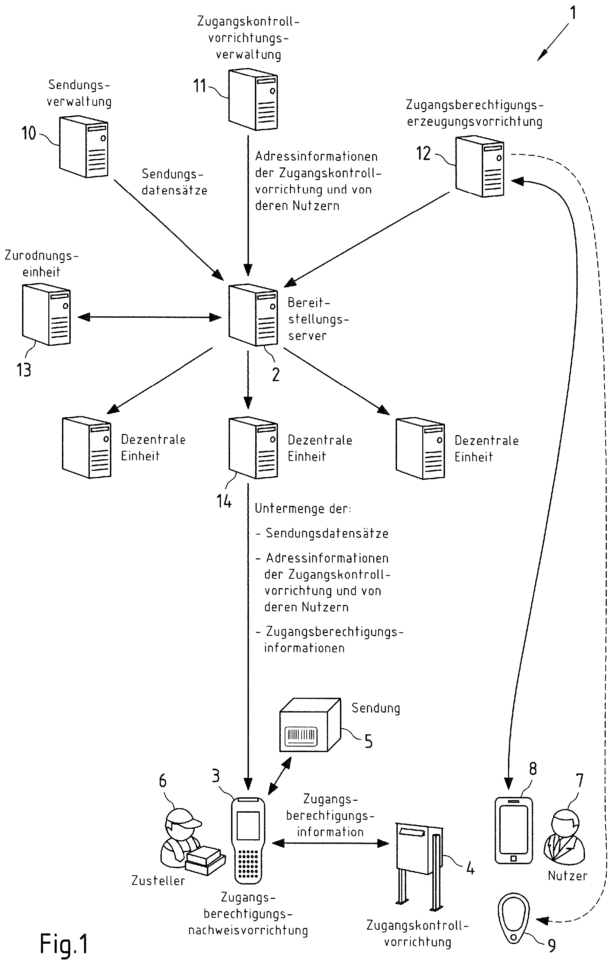

Fig. 1 ist eine schematische Darstellung einer beispielhaften Ausführungsform eines Systems 1 gemäß der vorliegenden Erfindung. Das System 1 umfasst eine Zugangsberechtigungsnachweisvorrichtung 3 gemäß dem ersten Aspekt der Erfindung, die vorliegend beispielhaft als Handscanner ausgeführt ist. Dementsprechend ist der Benutzer 6 der Zugangsberechtigungsnachweisvorrichtung vorliegend auch beispielhaft ein Zusteller von ein oder mehreren Sendungen, von denen eine Sendung 5 beispielhaft als Paket dargestellt wird. Nachfolgende Bezugnahmen auf den Zusteller 6 sollen allerdings auch als allgemeine Offenbarung betreffend den Benutzer 6 der Zugangsberechtigungsnachweisvorrichtung verstanden werden. Mit der Zugangsberechtigungsnachweisvorrichtung 3 kann sich der Zusteller 6 Zugang an einer Zugangskontrollvorrichtung 4 verschaffen, die einen Raum kontrolliert, in den Sendungen durch den Zusteller eingelegt oder aus dem Sendungen durch den Zusteller abgeholt werden können. Die Zugangskontrollvorrichtung 4 kann beispielsweise ein Paketkasten oder ein Teil davon sein und ist dementsprechend in Fig. 1 beispielhaft als Paketkasten dargestellt. Um Zugang zu der Zugangskontrollvorrichtung zu erhalten, muss der Zusteller 6 Zugangsberechtigungsinformation für die Zugangskontrollvorrichtung 6 auf der Zugangsberechtigungsnachweisvorrichtung 3 auswählen und an die Zugangskontrollvorrichtung 4 übertragen lassen. Die Vereinfachung dieser Auswahl ist Gegenstand des ersten Aspekts der Erfindung und beruht unter anderem auf der Erfassung von Informationen der Sendung 5, beispielsweise der Erfassung eines Barcodes (insbesondere eines Identcodes) von einem Etikett der Sendung 5 mittels eines in der Zugangsberechtigungsnachweisvorrichtung 3 enthaltenen optischen Scanmoduls. Des Weiteren benötigt die Zugangsberechtigungsnachweisvorrichtung 3 zur Realisierung des ersten Aspekts der Erfindung Mengen von Zugangsberechtigungsinformationen, Adressinformationen von Zugangskontrollvorrichtungen und/oder Adressinformationen von Nutzern der Zugangskontrollvorrichtungen, und Sendungsdatensätze. Diese werden gemäß dem zweiten Aspekt der Erfindung von dem Bereitstellungsserver 2 bereitgestellt und über die dezentralen Einheiten 14 an Zugangsberechtigungsnachweisvorrichtungen verteilt. Die dezentralen Einheiten 14 können beispielsweise Computer oder Server darstellen, die die bereitgestellten Informationen über ein Netzwerk (z.B. das Internet) von dem Bereitstellungsserver 2 empfangen und dann drahtgebunden (beispielsweise über eine Dockingstation, die beispielsweise über eine serielle Schnittstelle mit der dezentralen Einheit 14 verbunden ist und in die die Zugangsberechtigungsnachweisvorrichtung 3 zumindest zeitweise eingelegt wird) oder drahtlos (z.B. über ein Wireless Local Area Network (WLAN) oder GPRS) an eine oder mehrere Zugangsberechtigungsnachweisvorrichtungen 3 übertragen. Die bereitgestellten Informationen werden beispielsweise für jeweilige Zustellbezirke bereitgestellt, und eine Zugangsberechtigungsnachweisvorrichtung 3 erhält dann die bereitgestellten Informationen für denjenigen Zustellbezirk (oder mehrere Zustellbezirke), mit denen er (beispielsweise an einem Tag) assoziiert ist. Alternativ ist es auch denkbar, dass die bereitgestellten Informationen direkt an eine oder mehrere Zugangsberechtigungsnachweisvorrichtung kommuniziert werden, beispielsweise über ein Netzwerk wie z.B. das Internet, an das dann sowohl der Bereitstellungsserver 2 als auch die empfangende Zugangsberechtigungsnachweisvorrichtung 3 angeschlossen sind, oder über ein drahtloses Netzwerk wie z.B. ein Mobilfunknetz. Der Bereitstellungsserver 2 stellt diese Informationen als Untermenge einer größeren Menge von Informationen zusammen, die jeweils von einer Sendungsverwaltungseinheit 10 (Sendungsdatensätze), einer Zugangskontrollvorrichtungsverwaltungseinheit 11 (Adressinformationen der Zugangskontrollvorrichtung und/oder Adressinformation der Nutzer der Zugangskontrollvorrichtungen) und einer Zugangsberechtigungserzeugungsvorrichtung 12 (Zugangsberechtigungsinformationen) erhalten werden. Bei dieser Bereitstellung wird Bereitstellungsserver 2 von der Zuordnungseinheit 13 unterstützt, die aber auch Teil des Bereitstellungsservers 2 sein kann. Die Sendungsverwaltungseinheit 10 sammelt beispielsweise Informationen zu Sendungen, die an eine Vielzahl von Nutzern 7 zugestellt und/oder von diesen abgeholt werden müssen, in Form von Sendungsdatensätzen, die beispielsweise zumindest eine Adressinformation der Sendung (z.B. Zustell- oder Abholadresse) umfassen. Die Adressinformation kann beispielsweise durch eine Kennung, beispielsweise einen Leitcode repräsentiert sein oder zusätzlich zu einem Leitcode vorhanden sein. Die Sendungsdatensätze umfassen auch eine Kennung der jeweiligen Sendung, und können beispielsweise weitere Informationen zu der Sendung enthalten. Die Sendungsdatensätze können beispielsweise unabhängig von der Option, Sendungen in von Zugangskontrollvorrichtungen kontrollierte Räume einstellen oder abholen zu können, in dem System der Fig. 1 bereits genutzt werden, um Sendungen auf herkömmlichem Wege (durch Kontakt mit dem jeweiligen Sendungsempfänger oder Sendungsaufgeber) zuzustellen oder abzuholen und/oder um eine Sendungsverfolgung zu ermöglichen. Insofern wird diese vorhandene Information durch die Ausführungsbeispiele der vorliegenden Erfindung vorteilhaftgenutzt, um auch die Option, Sendungen in von Zugangskontrollvorrichtungen kontrollierte Räume einstellen oder abholen zu können, für den Zusteller möglichst komfortabel und effizient zu gestalten. Die Zugangskontrollvorrichtungsverwaltung 11 speichert Informationen zu Zugangskontrollvorrichtungen und Nutzern, die sich für die jeweiligen Zugangskontrollvorrichtungen registriert haben. Zu diesen Informationen zählen beispielsweise die Adresseninformationen zu den Zugangskontrollvorrichtungen und ihren Nutzern.

Die Zugangsberechtigungserzeugungsvorrichtung 12 erzeugt Zugangsberechtigungen für die Zugangskontrollvorrichtungen. Beispiele für verschiedene Arten von Zugangsberechtigungen und zu deren Prüfung und Authentifizierung am Empfänger wurden bereits oben erläutert. Beispielsweise verfügen die Zugangsberechtigungserzeugungsvorrichtung 12 und eine jeweilige Zugangskontrollvorrichtung 4 jeweils über einen Schlüssel sⱼ, auf dessen Basis von der Zugangsberechtigungserzeugungsvorrichtung 12 als Zugangstoken tᵢⱼ erzeugte Zugangsberechtigungsinformationen authentifiziert werden können. Alternativ kennt die Zugangsberechtigungserzeugungsvorrichtung beispielsweise die als jeweils individuelle Codes ausgebildeten Zugangsberechtigungsinformationen aller Zugangskontrollvorrichtung 4 und kann diese zur Verfügung stellen.

Die Zugangsberechtigungserzeugungsvorrichtung 12 erzeugt auch Zugangsberechtigungen, die auf einem Mobiltelefon 8 oder einem Tag (z.B. einem NFC- oder RFID-Tag) 9 eines (insbesondere registrierten) Nutzers (z.B. Besitzers) 7 der Zugangskontrollvorrichtung 4 gespeichert sind, um auch dem Nutzer 7 Zugang zu der Zugangskontrollvorrichtung verschaffen zu können, damit der Nutzer 7 vom Zusteller 6 in die Zugangskontrollvorrichtung eingelegte Sendungen 5 herausnehmen bzw. zur Abholung durch den Zusteller 6 vorgesehene Sendungen 5 in die Zugangskontrollvorrichtung 4 einlegen kann. Die Abholung von Sendungen 5 wird beispielsweise telefonisch, über eine Applikation auf seinem Mobiltelefon oder über ein Online-Portal durch den Nutzer 7 beauftragt.

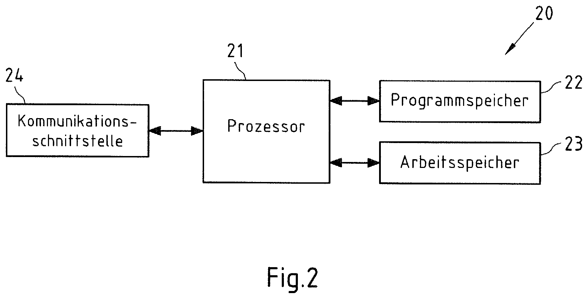

Fig. 2 zeigt eine schematische Darstellung einer beispielhaften Ausführungsform einer Vorrichtung 20 gemäß der vorliegenden Erfindung. Vorrichtung 20 kann beispielsweise die Zugangsberechtigungsnachweisvorrichtung 3 oder den Bereitstellungsserver 2 des Systems 1 der Fig. 1 repräsentieren.

Vorrichtung 20 umfasst einen Prozessor 21 mit zugeordnetem Arbeitsspeicher 23 und Programmspeicher 22. Der Prozessor 21 führt beispielsweise Programmanweisungen aus, die im Programmspeicher 22 gespeichert sind. Die Programmanweisungen führen das Verfahren gemäß dem ersten oder zweiten Aspekt der Erfindung aus und/oder steuern dieses. Damit enthält der Programmspeicher 22 ein Computerprogramm nach dem ersten oder zweiten Aspekt der Erfindung und stellt ein Computerprogrammprodukt zu dessen Speicherung dar.

Der Programmspeicher 22 kann beispielsweise ein persistenter Speicher, wie beispielsweise ein Read-Only-Memory (ROM)-Speicher sein. Der Programmspeicher kann beispielsweise fest mit dem Prozessor 21 verbunden sein, kann aber alternativ auch lösbar mit dem Prozessor 21 verbunden sein, beispielsweise als Speicherkarte, Diskette oder optisches Datenträgermedium (z.B. eine CD oder DVD). In dem Programmspeicher 22, oder in einem separaten Speicher, können auch weitere Informationen abgespeichert sein. Falls Vorrichtung 5 die Zugangsberechtigungsnachweisvorrichtung 3 ist, können zu diesen Informationen beispielsweise die von dem Bereitstellungsserver 2 bereitgestellten Informationen zählen (insbesondere Sendungsdatensätze, Zugangsberechtigungsinformationen und Adressinformationen von Zugangskontrollvorrichtungen und/oder von Nutzern von Zugangskontrollvorrichtungen).

Der Arbeitsspeicher 23 wird beispielsweise zur Speicherung temporärer Ergebnisse während der Abarbeitung der Programmanweisungen genutzt, es handelt sich hierbei beispiels-weise um einen flüchtigen Speicher, wie beispielsweise einen Random-Access-Memory (RAM)-Speicher.

Der Prozessor 21 ist ferner operativ mit einer Kommunikationseinheit 24 verbunden, mit der beispielsweise ein Informationsaustausch mit externen Vorrichtungen möglich ist.

Wenn die Vorrichtung 20 den Bereitstellungsserver 2 repräsentiert, kann die Kommunikationseinheit 24 beispielsweise zur Kommunikation über ein Netzwerk wie z.B. das Internet eingerichtet sein, um beispielsweise Informationen an eine oder mehrere der folgenden Einheiten übertragen und/oder von dieser/diesen empfangen zu können:
- die Sendungsverwaltungseinheit 10,
- die Zugangskontrollvorrichtungsverwaltungseinheit 11,
- die Zugangsberechtigungserzeugungsvorrichtung 12,
- die Zuordnungseinheit 13, und
- die dezentralen Einheiten 14.

Wenn die Vorrichtung 20 die Zugangsberechtigungsnachweisvorrichtung 3 repräsentiert, kann die Kommunikationseinheit 24 beispielsweise eines oder mehreres des folgenden umfassen:
- eine Schnittstelle zum drahtlosen (z.B. per WLAN) oder drahtgebundenen Empfang (z.B. über eine Dockingstation) von Informationen von einer dezentralen Einheit 14,
- eine Schnittstelle zur Kommunikation über ein zellulares Mobilfunknetz, z.B. zur Kommunikation mit einem Sendungsverfolgungsserver (der z.B. Teil der Sendungsverwaltungseinheit 10 sein kann) und/oder der Bereitstellungsserver 2 zu direkten Erhalt von bereitgestellten Informationen,
- eine Funkschnittstelle zur Kommunikation mit der Zugangskontrollvorrichtung 4, insbesondere eine Bluetooth-Schnittstelle und/oder eine RFID-Schnittstelle und/oder NFC-Schnittstelle.

Die Vorrichtung 20 kann auch weitere Komponenten enthalten, beispielsweise eine graphische Benutzerschnittstelle, um einem Benutzer 6 eine Interaktion mit der Vorrichtung 20 zu gestatten, insbesondere falls Vorrichtung 20 eine Zugangsberechtigungsnachweisvorrichtung 3 darstellt. Falls Vorrichtung 20 einen Handscanner repräsentiert, kann beispielsweise eine Einheit zur insbesondere optischen Erfassung von Informationen (z.B. ein Scanner) von der Vorrichtung 20 umfasst sein, und/oder beispielsweise eine Benutzerschnittstelle zur Erfassung von handschriftlichen Eingaben wie z.B. einer Unterschrift.

Die Komponenten 21-24 können beispielsweise zusammen als Modul oder Einheit ausgebildet sein, oder können zumindest teilweise als Einzelmodule ausgebildet sein, um eine leichte Austauschbarkeit bei etwaigen Defekten zu gewährleisten.

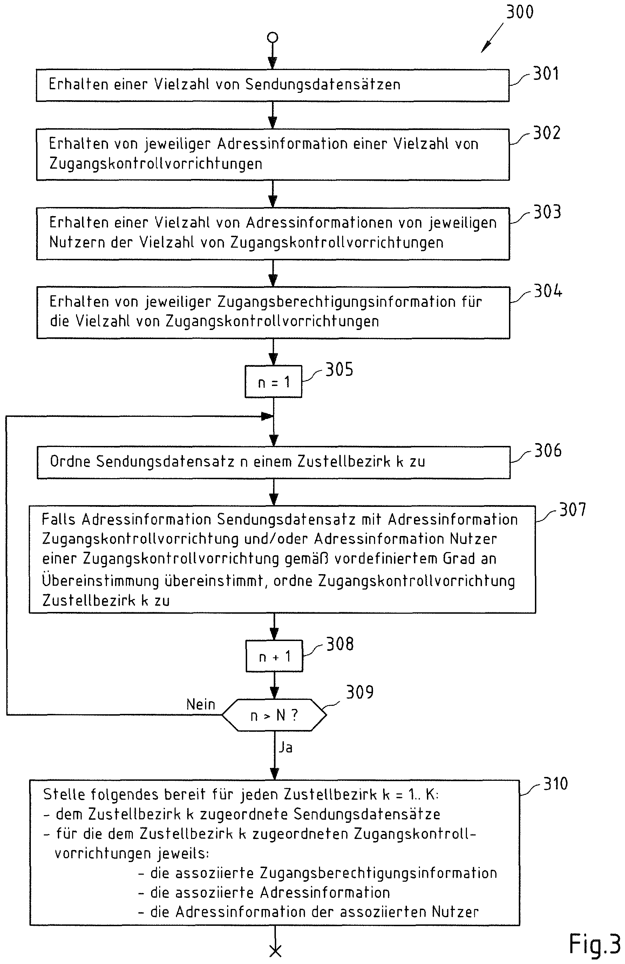

Fig. 3 stellt ein Flussdiagramm 300 einer beispielhaften Ausführungsform eines Verfahrens nach dem zweiten Aspekt der Erfindung dar. Das Verfahren wird beispielsweise von dem Bereitstellungsserver 2 und der Zuordnungseinheit 13 der Fig. 1 ausgeführt, beispielsweise durch deren Prozessor 21 (siehe Fig. 2), wobei der Programmspeicher 22 dann Programcode enthalten kann, der den Prozessor 21 zur Ausführung oder Steuerung des Verfahrens 300 bewegt. Wie bereits erwähnt kann die Zuordnungseinheit 13 auch als Teil des Bereitstellungsservers 2 umfasst ein.

In einem ersten Schritt 301 wird eine Vielzahl von Sendungsdatensätzen von der Sendungsverwaltungseinheit 10 an dem Bereitstellungsserver 2 erhalten. Es handelt sich dabei beispielsweise um alle in einem vordefinierten Zeitraum (z.B. ein Tag) zuzustellenden oder abzuholenden Sendungen eines Zustellunternehmens (z.B. der Deutschen Post DHL), dass das System 1 der Fig. 1 betreibt.

In einem Schritt 302 werden von der Zugangskontrollvorrichtungsverwaltungseinheit 11 Adressinformationen einer Vielzahl von Zugangskontrollvorrichtungen 4 an dem Bereitstellungsserver 2 erhalten, beispielsweise von allen Zugangskontrollvorrichtung des Zustellunternehmens.

In einem Schritt 303 werden von der Zugangskontrollvorrichtungsverwaltungseinheit 11 Adressinformationen der jeweiligen ein oder mehreren Nutzer der Vielzahl von Zugangskontrollvorrichtungen 4 erhalten. Die Informationen der Schritte 302 und 303 können beispielsweise auch gemeinsam an dem Bereitstellungsserver 2 erhalten werden.

In Schritt 304 werden von der Zugangsberechtigungserzeugungsvorrichtung 12 erzeugte jeweilige Zugangsberechtigungsinformationen für die Zugangskontrollvorrichtungen 4 der Vielzahl von Zugangskontrollvorrichtungen an dem Bereitstellungsserver 2 erhalten. Die Zugangsberechtigungsinformationen einer jeweiligen Zugangskontrollvorrichtung können dabei vom Bereitstellungsserver 2 beispielsweise zusammen mit den Adressinformationen einer jeweiligen Zugangskontrollvorrichtung in einen Zugangskontrollvorrichtungsdatensatz für die jeweilige Zugangskontrollvorrichtung geschrieben werden. Die Zuordnung der Zugangsberechtigungsinformation zu einer Zugangskontrollvorrichtung kann dabei beispielsweise anhand einer in der Zugangsberechtigungsinformation enthaltenen Kennung für die Zugangskontrollvorrichtung oder für eine von deren Komponenten (z.B. einem Schloss) erfolgen, mit deren Hilfe die Zugangskontrollvorrichtung, identifiziert werden kann.

Die in den Schritten 301-304 erhaltenen Informationen werden dann anhand der Schritte 305-309 einzelnen Zustellbezirken einer Vielzahl von Zustellbezirken zugeordnet. Ein Zustellbezirk wird dann später beispielsweise einem Zusteller 6 zugeordnet und die diesem Zustellbezirk zugeordneten und bereitgestellten Informationen auf die Zugangsberechtigungsnachweisvorrichtung 3 des Zustellers 6 übertragen.

In einem Schritt 305 wird dazu zunächst ein Zähler n auf 1 gesetzt. Der Zähler läuft von 1 bis N, wobei N die Anzahl der in Schritt 301 erhaltenen Sendungsdatensätze bezeichnet.

In Schritt 306 wird, beispielsweise von der Zuordnungseinheit 13, der n-te Sendungsdatensatz der erhaltenen Sendungsdatensätze einem Zustellbezirk k zugeordnet, wobei k eine Kennung für Zustellbezirke ist, die beispielsweise von 1 bis K läuft und K die Anzahl der insgesamt vorhandenen Zustellbezirke des Zustellunternehmens ist. Die Zuordnung der Sendungsdatensätze zu den geeigneten Zustellbezirken erfolgt beispielsweise unter Berücksichtigung der Zustell- oder Abholadresse der mit dem Sendungsdatensatz assoziierten Sendung. Beispielsweise ist jeder Zustellbezirk einem jeweiligen geographischen Bereich zugeordnet, und ein Sendungsdatensatz wird dann einem Zustellbezirk zugeordnet, wenn die Zustell- oder Abholadresse der Sendung in diesem Zustellbezirk liegt. Allerdings kann diese Zuordnung auch dynamisiert werden, indem auch das vorhandene Zustellpersonal pro Zustellbezirk und das Sendungsaufkommen pro Zustellbezirk berücksichtigt wird, was dazu führen kann, dass insbesondere in Randbereichen von Zustellbezirken zuzustellende oder abzuholende Sendungen nicht dem eigentlichen Zustellbezirk zugeordnet werden, in dem die Zustell- oder Abholadresse liegt, sondern in einem benachbarten Zustellbezirk, dessen Zusteller weniger Sendungen zu bearbeiten hat als der Zusteller des eigentlichen Zustellbezirks. Dieser Vorgang der Zuordnung von Sendungsdatensätzen (und damit Sendungen) zu Zustellbezirken wird auch als "Bezirksschneidung" bezeichnet und wird in dem System der Fig. 1 beispielsweise auch unabhängig von der Option, Sendungen in von Zugangskontrollvorrichtungen kontrolliere Räume zuzustellen oder aus diesen abzuholen, durchgeführt.

In Schritt 307 wird versucht, dem einem Zustellbezirk k zugeordneten Sendungsdatensatz n Informationen einer Zugangskontrollvorrichtung zuzuordnen, um damit auch eine Zuordnung dieser Informationen zu dem Zustellbezirk k zu erzielen. Dies wird anhand eines Vergleichs der Adressinformation des Sendungsdatensatzes mit der Adressinformation der Zugangskontrollvorrichtungen (insbesondere aller Zugangskontrollvorrichtung, zu denen in Schritt 302 Adressinformationen erhalten wurde) und/oder mit der Adressinformation der jeweiligen ein oder mehreren Nutzer der Zugangskontrollvorrichtungen (insbesondere aller Nutzer, für die in Schritt 303 Adressinformationen erhalten wurden) erzielt. Dabei wird ein vordefinierter Grad an Übereinstimmung in den Adressinformationen gefordert, damit eine Zuordnung der mit der Adressinformation (direkt oder über einen ihrer Nutzer) assoziierten Zugangskontrollvorrichtung zu dem Zustellbezirk k erfolgen kann. Beispielsweise erfordert der vordefinierte Grad an Übereinstimmung, dass zumindest die Postleitzahl, oder zumindest die Postleitzahl und die Straße, oder zumindest die Postleitzahl, Straße und Hausnummer übereinstimmen. Es sei darauf hingewiesen, dass der Abgleich der Adressinformationen auch rein auf der Adressinformation des Sendungsdatensatzes n und der Adressinformation der Zugangskontrollvorrichtung beruhen kann, also die Adressinformation der Nutzer der Zugangskontrollvorrichtung außer acht bleibt. Dies kann beispielsweise dann sinnvoll sein, wenn diese Adressinformation gar nicht vorliegt (weil z.B. Schritt 303 nicht stattfindet) oder wenn ein Nutzer eines Paketkastens immer die gleiche Adresse haben muss wie die ZugangskontrollVorrichtung. In flexibleren Systemen, in denen ein oder mehrere Nutzer der Zugangskontrollvorrichtung auch von der Adresse der Zugangskontrollvorrichtung abweichende Adressen aufweisen können, so dass beispielsweise mehrere Nachbarn die gleiche Zugangskontrollvorrichtung nutzen können, ist entweder die Berücksichtigung der Adressinformationen der Zugangskontrollvorrichtungen und der Adressinformationen der Nutzer, oder nur die Berücksichtigung der Adressinformationen der Nutzer beim Abgleich mit der Adressinformation des Sendungsdatensatzes n möglich. Letztere Variante kann auch bevorzugt sein, da sich die Adressen der Sendungen letztlich an den Adressen der Nutzer der Zugangskontrollvorrichtung und weniger an den Adressen der Zugangskontrollvorrichtung selbst orientieren.

Im Schritt 308 wird der Zähler n um eins inkrementiert und in Schritt 309 geprüft, ob bereits alle Sendungsdatensätze bearbeitet (zugeordnet) wurden. Wenn dies nicht der Fall ist, werden die Schritte 306-309 für den nächsten Sendungsdatensatz der N erhaltenen Sendungsdatensätze durchgeführt. Anderenfalls ist die Zuordnung der Sendungsdatensätze und der Zugangskontrollvorrichtungen zu den Zustellbezirken abgeschlossen, und das Flussdiagramm schreitet voran zu Schritt 310.

In Schritt 310 erfolgt dann die Bereitstellung der für jeden Zustellbezirk k (k=1..K) spezifischen Information, also die dem Zustellbezirk k zuggeordneten Sendungsdatensätze und für jeden Zustellbezirk folgende Information für die diesem Zustellbezirk jeweils zugeordneten Zugangskontrollvorrichtungen: die mit der jeweiligen Zugangskontrollvorrichtung assoziierte Zugangsberechtigungsinformation, die mit der jeweiligen Zugangskontrollvorrichtung assoziierte Adressinformation, und die mit den jeweiligen Nutzern der jeweiligen Zugangskontrollvorrichtung assoziierten Adressinformationen. Die Adressinformation der Zugangskontrollvorrichtungen und die Zugangsberechtigungsinformation können hier wiederum in einem Zugangskontrollvorrichtungsdatensatz enthalten und zusammen bereitgestellt werden. Die mit den Zugangskontrollvorrichtungen assoziierte Adressinformation muss allerdings beispielsweise dann nicht bereitgestellt werden, wenn diese in der Zugangsberechtigungsnachweisvorrichtung 3 nicht benötigt wird, beispielsweise weil dort der im Rahmen des ersten Aspekts der Erfindung durchgeführte Adressabgleich auf der Adressinformation einer identifizierten Sendung und den Adressinformationen der Nutzer der Zugangskontrollvorrichtung beruht.

Das in den Schritten 301-310 beschriebene Verfahren kann beispielsweise täglich von neuem durchgeführt werden, um für jeden Tag eine Zuordnung von Sendungen und Zugangskontrollvorrichtungen zu Zustellbezirken zu erhalten, und die daraus resultierenden Informationen zur Übertragung an Zugangsberechtigungsnachweisvorrichtungen bereitstellen zu können.

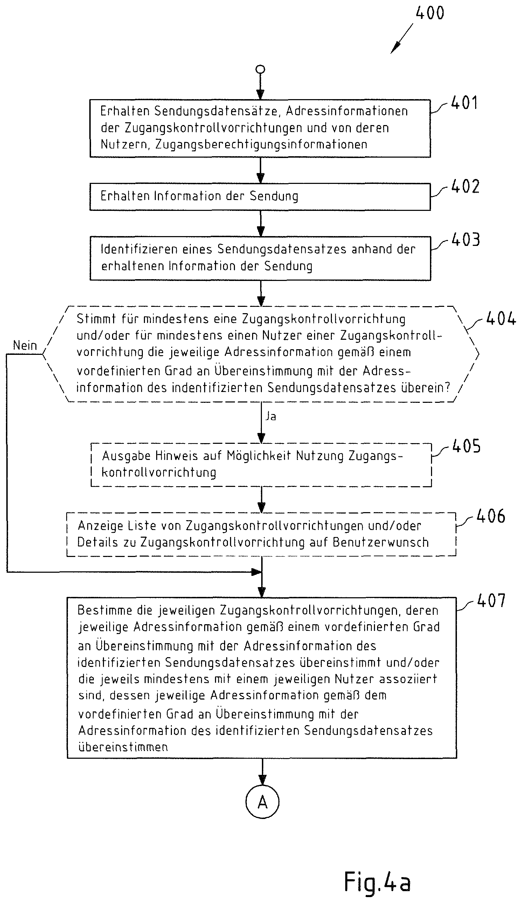

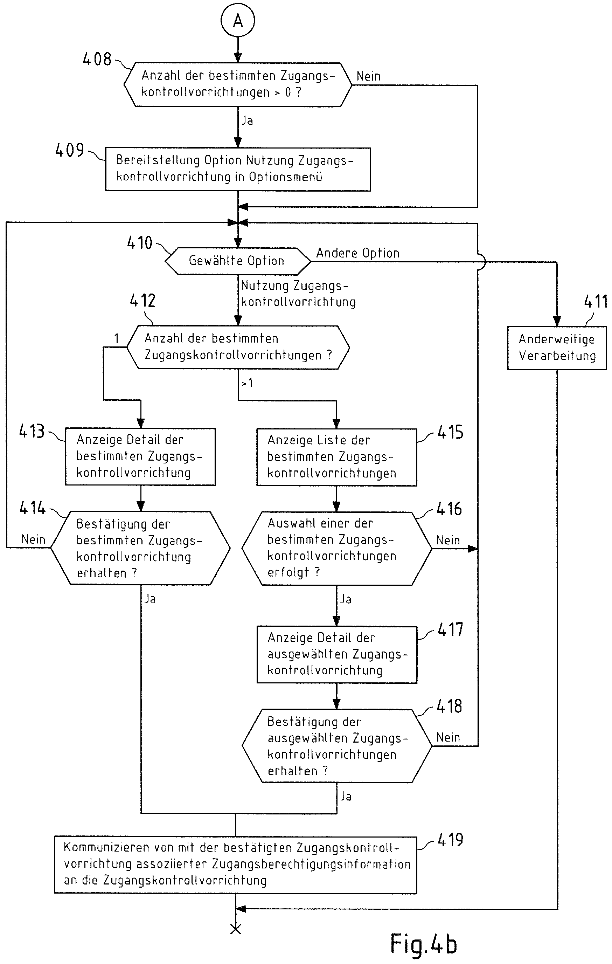

Fig. 4a/b stellt ein Flussdiagramm 400 einer beispielhaften Ausführungsform eines Verfahrens nach dem ersten Aspekt der Erfindung dar. Das Verfahren wird beispielsweise von der Zugangsberechtigungsnachweisvorrichtung 3 der Fig. 1 ausgeführt, beispielsweise durch deren Prozessor 21 (siehe Fig. 2), wobei der Programmspeicher 22 dann Programcode enthalten kann, der den Prozessor 21 zur Ausführung oder Steuerung des Verfahrens 400 bewegt.

In einem ersten Schritt 401 werden Sendungsdatensätze, Adressinformation von Zugangskontrollvorrichtungen und/oder Adressinformation von Nutzern von Zugangskontrollvorrichtungen und Zugangsberechtigungsinformationen erhalten. Es handelt sich dabei insbesondere um die für einen Zustellbezirk von dem Bereitstellungsserver 2 in Schritt 310 des Flussdiagramms der Fig. 3 bereitgestellten Informationen. Wie erläutert handelt es sich hierbei um eine im Vergleich zu der gesamten im System 1 der Fig. 1 enthaltenen Information um eine deutlich reduzierte Untermenge, die dem Zusteller 6 insbesondere die Auswahl von Berechtigungsinformation zur Erlangung von Zugang an einer konkreten Zugangskontrollvorrichtung 4 erleichtert. Durch die nachfolgenden Schritte wird diese Auswahl noch weiter vereinfacht. Die in Schritt 401 erhaltenen Sendungsdatensätze beziehen sich insbesondere nur auf Sendungen 5, die mit dem Zusteller 6 assoziiert sind, die dieser also in seinem Zustellbezirk zustellen oder abholen muss.

In einem zweiten Schritt 402 wird Information von der Sendung 5 erhalten. Dies kann insbesondere durch Einscannen eines Identcodes der Sendung 5 mittels der Zugangsberechtigungsnachweisvorrichtung 3 erfolgen (z.B. im Falle einer Zustellung), oder aber auch durch Eingabe des Identcodes in die Zugangsberechtigungsnachweisvorrichtung 3 (z.B. im Falle einer Abholung).

In Schritt 403 wird anhand der erhaltenen Information der Sendung 5 einer der in Schritt 401 erhaltenen Sendungsdatensätze identifiziert (beispielsweise anhand der in dem Sendungsdatensatz ebenfalls enthaltenen Information der Sendung 5, insbesondere des Identcodes). Der Sendungsdatensatz enthält zumindest Adressinformation, z.B. in Form eines Leitcodes, der in den nachfolgenden Schritten mit den Adressinformationen der Zugangskontrollvorrichtung bzw. mit den Adressinformationen von deren Nutzern abgeglichen wird, um für die Zustellung/Abholung potentiell relevante Zugangskontrollvorrichtungen (beispielsweise Zugangskontrollvorrichtungen in der gleichen Straße, in der zugestellt/abgeholt werden soll) zu bestimmen.

Dabei werden die nachfolgenden Schritte 404-419 beispielsweise nur dann ausgeführt, wenn anhand einer Prüfung einer beispielsweise in den Sendungsdaten enthaltenen Produkt- oder Serviceinformation betreffend die Sendung festgestellt wurde, dass eine Zustellung oder Abholung der Sendung in/aus einem von einer Zugangskontrollvorrichtung kontrollierten Raum überhaupt vorgesehen ist.

Die nachfolgenden Schritte 404-419 werden beispielsweise auch nur dann ausgeführt, wenn festgestellt wurde, dass ein gültiger Leitcode vorhanden ist. Dieser Leitcode kann entweder aus dem in Schritt 403 identifiziertem Sendungsdatensatz stammen oder ebenfalls beispielsweise durch Scannen von einem Etikett der Sendung 5 oder durch Eingeben in die Zugangsberechtigungsnachweisvorrichtung durch den Zusteller 5 erhalten worden sein. Ein gültiger Leitcode liegt beispielweise vor, wenn dieser Informationen zur Postleitzahl, Straße und Hausnummer einer Sendung umfasst (und beispielsweise zusätzlich eine Prüfziffer korrekt ist).

Falls festgestellt wird, dass kein gültiger Leitcode vorliegt, könnten die Schritte 404-419 beispielsweise dennoch ausgeführt werden, z.B. wenn festgestellt wird, dass zwar entweder kein Leitcode oder nur ein Leitcode mit einem vordefinierten Straßencode (z.B. "444"), der beispielsweise einen fiktiven Leitcode definiert, vorliegt, aber zumindest für eine Zugangskontrollvorrichtung und/oder für zumindest einen Nutzer einer Zugangskontrollvorrichtung Information auf der Zugangsberechtigungsnachweisvorrichtung vorhanden ist, beispielsweise mit diesem Nutzer und/oder dessen assoziierter Zugangskontrollvorrichtung assoziierte Adressinformation und/oder Zugangsberechtigungsinformation für die mit diesem Nutzer assoziierte Zugangskontrollvorrichtung.

Die folgenden Schritte 404-406 sind optional und dienen der Ausgabe eines Hinweises auf die Möglichkeit, eine Zugangskontrollvorrichtung (bzw. einen von ihr kontrollierten Raum) für die Zustellung/Abholung zu nutzen.

Dazu wird im Schritt 404 geprüft, ob für mindestens eine Zugangskontrollvorrichtung und/oder für mindestens einen Nutzer einer Zugangskontrollvorrichtung die jeweilige Adressinformation (z.B. die Leitinformation oder ein Teil davon) gemäß einem vordefinierten Grad an Übereinstimmung mit der Adressinformation (z.B. dem Leitcode oder einem Teil davon) des identifizierten Sendungsdatensatzes übereinstimmt. Auch hier kann wiederum beispielsweise nur ein Abgleich der Adressinformation der identifizierten Sendungsdaten mit der Adressinformation der Nutzer (und nicht der Zugangskontrollvorrichtungen) vorgenommen werden. Der vordefinierte Grad an Übereinstimmung kann beispielsweise erfordern, dass die Elemente Postleitzahl, Straße und Hausnummer des Leitcodes mit den korrespondierenden Einträgen der Adressinformation (also z.B. der Leitinformation) der Nutzer übereinstimmen müssen.

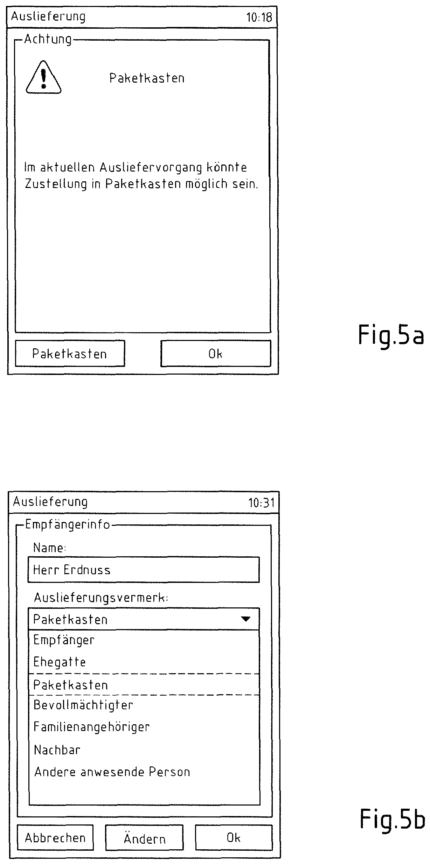

Wenn die Prüfung positiv verläuft, wird in Schritt 405 ein Hinweis ausgegeben (beispielsweise auf einer graphischen Benutzerschnittstelle der Zugangsberechtigungsnachweisvorrichtung 3), dass für die vorliegende Sendung eine Zugangskontrollvorrichtung genutzt werden kann. Ein derartiger Hinweis ist in Fig. 5a beispielhaft dargestellt, wobei dort als Zugangskontrollvorrichtung beispielhaft wiederum ein Paketkasten herangezogen wurde, ebenso wie auch in den weiteren Fig. 5b-5f, was allerdings auch als allgemeine Offenbarung einer Zugangskontrollvorrichtung 4 verstanden werden sollte. Hinsichtlich der Fig. 5a-5f wird beispielhaft davon ausgegangen, dass die dort gezeigten Anzeigen von einer Software auf der Zugangsberechtigungsnachweisvorrichtung 3 erzeugt werden und dass die Zugangsberechtigungsnachweisvorrichtung 3 über einen Touchscreen verfügt, auf dem mit einem Finger oder Stylus Eingaben vorgenommen und Buttons gewählt werden können.

Der Zusteller 6 hat dann in Schritt 406 die Möglichkeit, sich die in Frage kommende(n) Zugangskontrollvorrichtung(en) als Liste oder in einer Detailansicht, die für eine Zugangskontrollvorrichtung deren Nutzer anzeigt, anzeigen zu lassen.

Durch den Hinweis in Schritt 404 wird der Zusteller 6 also frühzeitig im Zustell-/Abholvorgang auf die Möglichkeit hingewiesen, dass er eine Zugangskontrollvorrichtung 4 für die Zustellung/Abholung der Sendung verwenden kann, so dass er anschließend gezielt diese Zustell-/Abholoption verfolgen kann, beispielsweise durch Auswahl einer entsprechenden Option an der Zugangsberechtigungsnachweisvorrichtung 3.

Nach Schritt 404 kann sich beispielsweise ein Schritt anschließen, in dem der Zusteller 6 einen Namen des Sendungsempfängers (wie beispielsweise auf der Sendung angebracht) oder des Auftraggebers der Abholung einer Sendung eingibt.

In Schritt 407 werden diejenigen Zugangskontrollvorrichtung bestimmt, deren jeweilige Adressinformation gemäß einem vordefinierten Grad an Übereinstimmung mit der Adressinformation des identifizierten Sendungsdatensatzes übereinstimmen und/oder die jeweils mindestens mit einem jeweiligen Nutzer assoziiert sind, dessen jeweilige Adressinformation gemäß dem vordefinierten Grad an Übereinstimmung mit der Adressinformation des identifizierten Sendungsdatensatzes übereinstimmen. Auch hier kann der Abgleich beispielsweise wiederum nur auf der Adressinformation der Nutzer und der Adressinformation des identifizierten Sendungsdatensatzes, aber nicht auf der Adressinformation der Zugangskontrollvorrichtungen beruhen. Der vordefinierte Grad an Übereinstimmung kann hier beispielsweise erfordern, dass zumindest eine Übereinstimmung hinsichtlich der Postleitzahl und der Straße vorliegt, also beispielsweise die jeweiligen eine Postleitzahl und Straße repräsentierenden Codebestandteile übereinstimmen. Dieser Schritt 407 dient als Vorbereitung der nachfolgenden Schritte,

In Schritt 408 wird geprüft, ob die Anzahl der in Schritt 407 bestimmten Zugangskontrollvorrichtungen größer als 0 ist. Wenn dies nicht der Fall ist, wird der Schritt 409 übersprungen, anderen falls wird in Schritt 409 eine Option zur Nutzung einer Zugangskontrollvorrichtung für die Auslieferung/Abholung bereitgestellt, beispielsweise in einer Menüführung auf der Zugangsberechtigungsnachweisvorrichtung 3. Dies ist wiederum am Beispiel eines Paketkastens als Zugangskontrollvorrichtung 4 in Fig. 5b dargestellt. Im Auswahlfeld für den "Auslieferungsvermerk", das sich bei Betätigung des rechts angeordneten Dreieck-Symbols öffnet, ist neben Auslieferungsoptionen wie "Empfänger", "Ehegatte", "Familienangehöriger", "Nachbar" auch "Paketkasten" vorhanden und kann vom Zusteller 6 angewählt und durch "OK" bestätigt werden. Ohne die Option "Paketkasten" im Auswahlmenü hat der Zusteller 6 keine Möglichkeit, Zugangsberechtigungsinformation an eine Zugangskontrollvorrichtung (z.B. einen Paketkasten) zu übertragen. Durch den Schritt 408 wird also eine softwaretechnisch auf der Zugangsberechtigungsnachweisvorrichtung 3 realisierte Einschränkung der Nutzungsbefugnis der auf der Zugangsberechtigungsnachweisvorrichtung 3 gespeicherten Zugangsberechtigungsinformationen vorgenommen, um etwaigem Missbrauch insbesondere für den Fall vorzubeugen, dass die Zugangsberechtigungsnachweisvorrichtung 3 verloren oder gestohlen wird. Ohne eine einer Zugangskontrollvorrichtung 4 zugeordnete Sendung (insbesondere deren Identcode) ist keine Öffnung einer Zugangskontrollvorrichtung 4 möglich, selbst wenn Zugangsberechtigungsinformation für diese Zugangskontrollvorrichtung 4 auf der Zugangsberechtigungsnachweisvorrichtung 3 vorhanden sein sollte. Dies schränkt die Möglichkeiten des Missbrauchs der Zugangsberechtigungsnachweisvorrichtung 3 erheblich ein. Insbesondere müsste zur missbräuchlichen Entnahme einer Sendung aus einer Zugangskontrollvorrichtung (z.B. einem Paketkasten) mit einer gestohlenen Zugangsberechtigungsnachweisvorrichtung zum einen grundsätzlich Zugangsberechtigungsinformation für diese Zugangskontrollvorrichtung auf der gestohlenen Zugangsberechtigungsnachweisvorrichtung vorhanden sein (erste Hürde) und des weiteren dem Bediener der Zugangsberechtigungsnachweisvorrichtung der Identcode der in der Zugangskontrollvorrichtung enthaltenen Sendung bekannt sein oder ein Identcode für eine für die Zugangskontrollvorrichtung bestimmte Sendung bekannt sein (zweite Hürde). Die Missbrauchsmöglichkeiten werden noch weiter eingeschränkt, wenn die Zugangsberechtigungsinformation nur eine beschränkte zeitliche Gültigkeit, beispielsweise von nur einem Tag, aufweisen, und/oder die Häufigkeit der Benutzung einer Zugangsberechtigungsinformation an einer Zugangskontrollvorrichtung durch einen in der Zugangsberechtigungsinformation enthaltenen Maximalwert, der von der Zugangskontrollvorrichtung bei jedem Zugangsversuch gegengeprüft wird, beschränkt ist.

In Schritt 410 wird abgefragt, welche Option der Zusteller 6 gewählt hat. Wenn es sich nicht um die Option der Nutzung der Zugangskontrollvorrichtung zur Auslieferung/Abholung handelt (also nicht um die Option "Paketkasten" in Fig. 5b, wird eine anderweitige Verarbeitung in Schritt 411 durchgeführt, beispielsweise eine Menüführung, die den Zusteller bei einer anderen Auslieferungs-/Abholungsoption unterstützt, beispielsweise der Zustellung an den Sendungsempfänger selbst oder an einen Nachbarn des Sendungsempfängers.

Wenn als Option die Nutzung der Zugangskontrollvorrichtung gewählt wurde, wird in Schritt 412 festgestellt, ob die Anzahl der in Schritt 407 bestimmten Zugangskontrollvorrichtungen gleich 1 oder größer 1 ist.

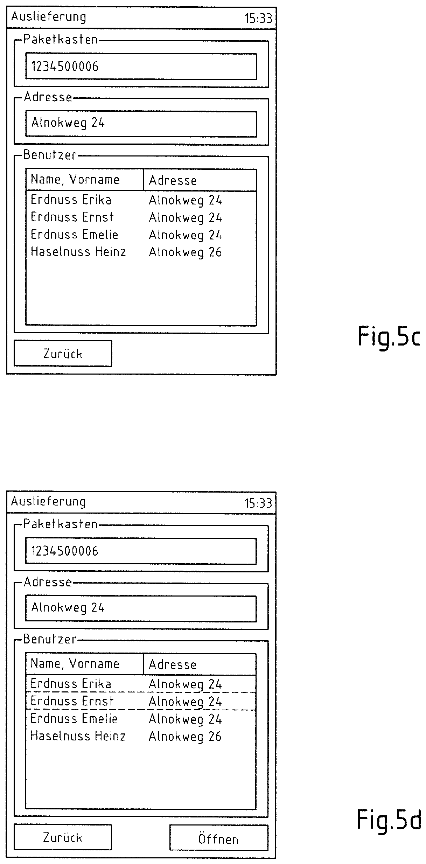

Im ersten Fall wird in Schritt 413 unmittelbar die einzige bestimmte Zugangskontrollvorrichtung mit ihren Details, insbesondere deren Nutzern, angezeigt. Dies ist wiederum in Fig. 5c für einen Paketkasten als Beispiel einer Zugangskontrollvorrichtung dargestellt. Um diesen Paketkasten zu bestätigen, muss der Zusteller 6 den Sendungsempfänger aus der Liste der Nutzer auswählen und dann den gemäß Fig. 5d rechts unten erscheinenden "OK" Button betätigen, wenn von der Zugangsberechtigungsnachweisvorrichtung Zugangsberechtigungsinformation an diesen Paketkasten kommunizieren lassen möchte. Dies wird in Schritt 413 abgefragt. Falls keine Bestätigung erfolgt (beispielsweise weil stattdessen der "Zurück"-Button betätigt wird oder weil eine vordefinierte Zeitspanne abläuft, springt das Flussdiagramm 400 zurück zu Schritt 410, wo beispielsweise eine andere Option gewählt werden kann. Falls die angezeigte Zugangskontrollvorrichtung allerdings bestätigt wird, wird in Schritt 419 die mit der bestätigten Zugangskontrollvorrichtung assoziierte Zugangsberechtigungsinformation von der Zugangsberechtigungsnachweisvorrichtung an diese Zugangskontrollvorrichtung kommuniziert. Dies kann insbesondere drahtlose erfolgen, beispielsweise via Bluetooth. Damit das zeitaufwändige Bluetooth-Pairing vermieden werden kann, erhält die Zugangsberechtigungsnachweisvorrichtung 3 im Schritt 401 bevorzugt auch die Bluetooth-Medium-Access-Control (MAC) - Adressen der Zugangskontrollvorrichtungen. Diese sind beispielsweise ebenfalls in den jeweiligen Zugangskontrollvorrichtungsdatensätzen enthalten. Die mit der bestätigten Zugangskontrollvorrichtung assoziierte Zugangsberechtigungsinformation kann der Zugangskontrollvorrichtung beispielsweise anhand einer in der Zugangsberechtigungsinformation enthaltenen oder mit dieser assoziierten Kennung der Zugangskontrollvorrichtung zugeordnet werden und/oder ist zusammen mit der Adressinformation der Zugangskontrollvorrichtung in einem Zugangskontrollvorrichtungsdatensatz der jeweiligen Zugangskontrollvorrichtung enthalten.

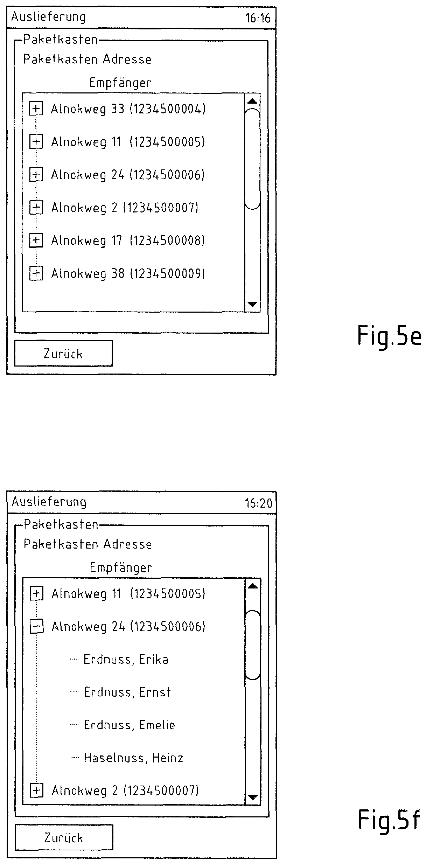

Wenn in Schritt 412 festgestellt wird, dass in Schritt 407 mehr als eine Zugangskontrollvorrichtung bestimmt wurde, wird dem Zusteller 6 in Schritt 415 eine Liste der in Schritt 407 bestimmten Zugangskontrollvorrichtungen angezeigt (vgl. Fig. 5e). In dieser Liste kann der Zusteller 6 sich durch Anwählen der "+"-Symbole jeweils die Nutzer einer jeweiligen Zugangskontrollvorrichtung (hier beispielhaft: Paketkästen) anzeigen lassen (vgl. Fig. 5f) oder durch Antippen eines Paketkastens (z.B. dessen Adresse "Alnokweg 24" und/oder dessen ID "1234500006") oder dessen Nutzers (z.B. Erdnuss, Ernst) eine Zugangskontrollvorrichtung auswählen. In Schritt 416 wird geprüft, ob eine derartige Auswahl erfolgt ist. Ist dies nicht der Fall (z.B. weil stattdessen der "Zurück"-Button betätigt wurde, oder weil eine vordefinierte Zeit ohne Aktion des Zustellers 6 abgelaufen ist, springt das Flussdiagramm zurück zu Schritt 410. Anderenfalls werden in Schritt 417 Details der Zugangskontrollvorrichtung angezeigt, ähnlich wie in Schritt 413 (vgl. Fig. 5c) und auf eine Bestätigung der Zugangskontrollvorrichtung (gfs. nach vorheriger Auswahl eines Nutzers) durch Betätigung des "OK"-Buttons gewartet, was in Schritt 418 geprüft wird. Wenn keine Bestätigung stattfindet (z.B. weil stattdessen der "Zurück"-Button betätigt wurde oder eine vordefinierte Zeitspanne abgelaufen ist), springt das Flussdiagramm 400 zurück zu Schritt 410. Anderenfalls wird in Schritt 419 die mit der bestätigten Zugangskontrollvorrichtung assoziierte Zugangsberechtigungsinformation von der Zugangsberechtigungsnachweisvorrichtung an diese Zugangskontrollvorrichtung kommuniziert.

Es ist deutlich erkennbar, dass durch das Bestimmen in Schritt 407 in Kombination mit dem Schritten 413-414 und 415-418 die Menge der Zugangskontrollvorrichtungen, aus denen der Zusteller 6 eine Auswahl treffen muss, wenn er Zugang an einer konkreten Zugangskontrollvorrichtung erhalten will, gegenüber einem Ansatz, bei dem dem Zusteller 6 sämtliche Zugangskontrollvorrichtungen, zu denen in Schritt 401 Informationen erhalten wurden, angezeigt werden, erheblich reduziert ist. Eine weitere Reduktion der Auswahlmenge wird bereits an dem Bereitstellungsserver 2 vorgenommen, wie zu Schritt 307 und 310 des Verfahrens 300 der Fig. 3 erläutert wurde. Dies erhöht die Benutzerfreundlichkeit und die Schnelligkeit des Zustell- und Abholvorgangs erheblich.

An den Schritt 419 können sich optional weitere Schritte anschließen. Beispielsweise kann der Zusteller 6 gefragt werden, ob er Zugang zu der Zugangskontrollvorrichtung 4 erhalten hat, und/oder erinnert werden, nachdem Zugang erhalten wurde, die Zugangsmöglichkeit für unbefugte Personen wieder zu beseitigen, beispielsweise indem eine Tür zu dem Raum, die bei Gewährung des Zugangs geöffnet wird, durch den Zusteller 6 wieder geschlossen wird. Zusätzlich oder alternativ kann das Flussdiagramm 400, anstatt zu enden, wieder zu Schritt 402 springen, um einen weiteren Zustell-/Abholvorgang zu ermöglichen.

## Patentansprüche

1. Verfahren (400), durchgeführt durch eine Zugangsberechtigungsnachweisvorrichtung (3), insbesondere einen Handscanner, das Verfahren umfassend:
- Erhalten (402) einer Information einer Sendung (5),
- Identifizieren (403) eines Sendungsdatensatzes aus einer Vielzahl von auf der Zugangsberechtigungsnachweisvorrichtung (3) gespeicherten Sendungsdatensätzen, die insbesondere nur einem Benutzer der Zugangsberechtigungsnachweisvorrichtung in einem vordefinierten Zeitraum zugeordnete Sendungsdatensätze umfassen, unter Verwendung der erhaltenen Information der Sendung, wobei der Sendungsdatensatz mit der Sendung assoziierte Adressinformation umfasst,
- Bestimmen (407) einer oder mehrerer Zugangskontrollvorrichtung(en) aus einer Vielzahl von Zugangskontrollvorrichtungen anhand eines Ergebnisses eines Vergleichs der Adressinformation des Sendungsdatensatzes mit jeweiliger mit den Zugangskontrollvorrichtungen assoziierter und auf der Zugangsberechtigungsnachweisvorrichtung gespeicherter Adressinformation und/oder mit mit einem oder mehreren Nutzer(n) (7) der jeweiligen Zugangskontrollvorrichtungen jeweils assoziierter und auf der Zugangsberechtigungsnachweisvorrichtung (3) gespeicherter Adressinformation,
- Ermöglichen einer Auswahl (415) und/oder einer Bestätigung (413) einer Zugangskontrollvorrichtung (4) der einen oder mehreren bestimmten Zugangskontrollvorrichtung(en) durch einen Benutzer (6) der Zugangsberechtigungsnachweisvorrichtung (3), und
- Kommunizieren (419), insbesondere drahtloses Kommunizieren, von mit der Zugangskontrollvorrichtung (4) assoziierter Zugangsberechtigungsinformation an die Zugangskontrollvorrichtung (4), um Zugang zu einem der Zugangskontrollvorrichtung (4) zugeordneten Raum zu verschaffen, so dass die Sendung (5) in den Raum eingelegt oder aus diesem entnommen werden kann.

2. Verfahren nach Anspruch 1, wobei die Zugangsberechtigungsnachweisvorrichtung (3) jeweils unterschiedliche Zugangsberechtigungsinformation für jede Zugangskontrollvorrichtung der Vielzahl von Zugangskontrollvorrichtungen speichert; und/oder wobei eine Anzahl der einen oder mehreren bestimmten Zugangskontrollvorrichtung(en) mit zunehmendem Grad an Übereinstimmung zwischen der Adressinformation des Sendungsdatensatzes und den mit den Zugangskontrollvorrichtungen und/oder deren Nutzern jeweils assoziierten Adressinformationen abnimmt, insbesondere so dass lediglich eine Zugangskontrollvorrichtung (4) bestimmt wird, wenn die mit dieser Zugangskontrollvorrichtung und/oder deren Nutzer(n) assoziierte Adressinformation vollständig mit der Adressinformation des Sendungsdatensatzes übereinstimmt.

3. Verfahren nach einem der Ansprüche 1-2, wobei die Auswahl (415) der einen Zugangskontrollvorrichtung (4) der einen oder mehreren bestimmten Zugangskontrollvorrichtung(en) ermöglicht wird, falls mehr als eine Zugangskontrollvorrichtung bestimmt wurden; und/oder
wobei die Bestätigung (413) der Zugangskontrollvorrichtung (4) der einen oder mehreren bestimmten Zugangskontrollvorrichtung(en) ermöglicht wird, falls nur die Zugangskontrollvorrichtung (4) bestimmt wurde und/oder nachdem die Zugangskontrollvorrichtung (4) durch den Benutzer (6) der Zugangsberechtigungsnachweisvorrichtung (3) aus der/den einen oder mehreren bestimmten Zugangskontrollvorrichtung(en) ausgewählt wurde.

4. Verfahren nach Anspruch 3, wobei das Ermöglichen nach Anwahl einer Menüoption durch den Benutzer (6) der Zugangsberechtigungsnachweisvorrichtung erfolgt, die vorhanden ist, wenn zumindest eine Zugangskontrollvorrichtung bestimmt wurde.

5. Verfahren nach einem der Ansprüche 1-4, ferner umfassend:
- Ausgeben (405) eines Hinweises auf die Möglichkeit zur Nutzung einer Zugangskontrollvorrichtung, wenn die Adressinformation des Sendungsdatensatzes einen vordefinierten Grad an Übereinstimmung mit zumindest einer mit einer Zugangskontrollvorrichtung assoziierten Adressinformation und/oder mit zumindest einer mit einem Nutzer einer Zugangskontrollvorrichtung assoziierten Adressinformation aufweist

6. Verfahren nach einem der Ansprüche 1-5, wobei das Erhalten (402) der Information der Sendung (5) das drahtlose, insbesondere optische Erfassen der Information der Sendung (5) durch die Zugangsberechtigungsnachweisvorrichtung (3),
das Erfassen einer Eingabe der Information der Sendung (5) durch einen Benutzer (6) der Zugangsberechtigungsnachweisvorrichtung (3) mittels einer Benutzerschnittstelle der Zugangsberechtigungsnachweisvorrichtung (3), oder
das Auswählen oder Anwählen der auf der Zugangsberechtigungsnachweisvorrichtung (3) gespeicherten Information der Sendung (5) durch einen Benutzer (6) der Zugangsberechtigungsnachweisvorrichtung (3) umfasst

7. Verfahren nach einem der Ansprüche 1-6, wobei die jeweilige mit den Zugangskontrollvorrichtungen assoziierte und auf der Zugangsberechtigungsnachweisvorrichtung gespeicherte Adressinformation und/oder die mit einem oder mehreren Nutzer(n) (7) der jeweiligen Zugangskontrollvorrichtung jeweils assoziierte und auf der Zugangsberechtigungsnachweisvorrichtung (3) gespeicherte Adressinformation nur jeweils mit solchen Zugangskontrollvorrichtungen assoziierte Adressinformation und/oder nur mit jeweils einem oder mehreren Nutzer(n) (7) von solchen Zugangskontrollvorrichtungen jeweils assoziierte Adressinformation umfasst, bei denen die jeweilige Adressinformation und/oder die jeweilige Adressinformation ihrer jeweiligen ein oder mehreren Nutzer gemäß einem vordefinierten Grad an Übereinstimmung mit der Adressinformation zumindest einer der gespeicherten Sendungsdatensätze übereinstimmt.

8. Verfahren nach Anspruch 7, wobei die kommunizierte Zugangsberechtigungsinformation aus einer Vielzahl von auf der Zugangsberechtigungsnachweisvorrichtung gespeicherten Zugangsberechtigungsinformationen stammt, wobei diese Zugangsberechtigungsinformationen nur Zugangsberechtigungsinformationen von denjenigen Zugangskontrollvorrichtungen umfassen, bei denen die jeweilige Adressinformation und/oder die jeweilige Adressinformation ihrer jeweiligen ein oder mehreren Nutzer gemäß einem vordefinierten Grad an Übereinstimmung mit der Adressinformation zumindest einer der gespeicherten Sendungsdatensätze übereinstimmt.

9. Verfahren nach einem der Ansprüche 1-8, wobei auf zumindest zwei Zugangsberechtigungsnachweisvorrichtungen (3) jeweils die gleiche mit einer Zugangskontrollvorrichtung assoziierte Zugangsberechtigungsinformation gespeichert ist.

10. Verfahren nach einem der Ansprüche 1-9, wobei die Zugangsberechtigungsinformation nur an die Zugangskontrollvorrichtung (4) kommuniziert werden kann, falls ein vordefinierter Grad an Übereinstimmung zwischen der Adressinformation der Sendungsdaten und der mit der Zugangskontrollvorrichtung assoziierten Adressinformation und/oder der mit einem Nutzer der Zugangskontrollvorrichtung assoziierten Adressinformation besteht

11. Verfahren nach einem der Ansprüche 1-10, wobei das Bestimmen (407) der einen oder mehreren Zugangskontrollvorrichtung(en), das Ermöglichen einer Auswahl (415) und/oder einer Bestätigung (413) einer der einen oder mehreren bestimmten Zugangskontrollvorrichtung(en) und/oder das Kommunizieren (419) von mit der bestätigten und/oder ausgewählten Zugangskontrollvorrichtung (4) assoziierter Zugangsberechtigungsinformation nur erfolgt, falls der identifizierte Sendungsdatensatz angibt, dass die Sendung (5) grundsätzlich in einen einer Zugangskontrollvorrichtung (4) zugeordneten Raum eingelegt oder aus diesem entnommen werden darf.

12. Zugangsberechtigungsnachweisvorrichtung (3), insbesondere ein Handscanner, eingerichtet zur Ausführung des Verfahrens (400) nach einem der Ansprüche 1-11.

13. Verwendung einer Zugangsberechtigungsnachweisvorrichtung (3), insbesondere eines Handscanners, nach Anspruch 12, umfassend:
- Handhabung der Zugangsberechtigungsnachweisvorrichtung (3), so dass die Information der Sendung (5) von der Zugangsberechtigungsnachweisvorrichtung (3) erhalten wird,
- Auswählen und/oder Bestätigen einer Zugangskontrollvorrichtung (4) der einen oder mehreren von der Zugangsberechtigungsnachweisvorrichtung bestimmten Zugangskontrollvorrichtung(en), und
- Einlegen der Sendung (5) in den der Zugangskontrollvorrichtung (4) zugeordneten Raum oder Entnehmen der Sendung (5) aus dem Raum, nachdem die Zugangsberechtigungsnachweisvorrichtung (3) durch das Kommunizieren (419) der Zugangsberechtigungsinformation an die Zugangskontrollvorrichtung (4) Zugang zu dem Raum verschafft hat.

14. System (1), umfassend eine Zugangsberechtigungsnachweisvorrichtung (3) nach Anspruch 12 und einen Bereitstellungsserver (2), der eingerichtet ist zur Ausführung des folgenden Schritts:
- Bereitstellen (310) der folgenden Informationen:
- einer Vielzahl von Sendungsdatensätzen, die insbesondere nur einem Benutzer einer Zugangsberechtigungsnachweisvorrichtung in einem vordefinierten Zeitraum zugeordnete Sendungsdatensätze umfassen, wobei jeder der Sendungsdatensätze jeweilige Adressinformation einer jeweiligen Sendung umfasst,
- mit Zugangskontrollvorrichtungen einer Vielzahl von Zugangskontrollvorrichtungen assoziierten jeweiligen Adressinformationen und/oder mit einem oder mehreren jeweiligen Nutzer(n) der Vielzahl von Zugangskontrollvorrichtungen assoziierten jeweiligen Adressinformationen, und
- mit den Zugangskontrollvorrichtungen der Vielzahl von Zugangskontrollvorrichtungen assoziierten jeweiligen Zugangsberechtigungsinformationen.

15. Computerprogramm, umfassend Programmanweisungen, die einen Prozessor (21) zur Ausführung des Verfahrens (400, 300) gemäß einem der Ansprüche 1-11 veranlassen, wenn das Computerprogramm auf dem Prozessor (21) läuft

## Claims

1. A method (400) performed by an access authorisation proving device (3), in particular a hand-held scanner, said method including:
- obtaining (402) information of a consignment (5),
- identifying (403), by using the obtained information of the consignment, a consignment data record from a plurality of consignment data records stored in the access authorisation proving device (3), the data records in particular including only consignment data records assigned to a user of the access authorisation proving device within a predefined time period, wherein the consignment data record includes address information associated with the consignment,
- determining (407) one or more access control devices from a plurality of access control devices by way of a result of a comparison of the address information of the consignment data record with respective address information associated with the access control devices and stored in the access authorisation proving device and/or with address information associated, respectively, with one or more users (7) of the respective access control devices and stored in the access authorisation proving device (3),
- enabling a selection (415) and/or a confirmation (413) of an access control device (4) of the one or more determined access control devices by a user (6) of the access authorisation proving device (3), and
- communicating (419), in particular wirelessly communicating, access authorisation information associated with the access control device (4) to the access control device (4), in order to provide access to a space assigned to the access control device (4), so that the consignment (5) can be placed into the space or removed therefrom.

2. The method according to claim 1, wherein the access authorisation proving device (3) stores respectively different access authorisation information for each access control device of the plurality of access control devices; and/or wherein a number of the one or more determined access control devices decreases with an increase in the degree of conformity between the address information of the consignment data record and the address information associated, respectively, with the access control devices and/or their users, in particular so that merely one access control device (4) is determined if the address information associated with this access control device and/or the user(s) thereof fully matches the address information of the consignment data record.

3. The method according to one of claims 1 - 2, wherein the selection (415) of the one access control device (4) of the one or more determined access control devices is made possible if more than one access control device have been determined; and/or
wherein the confirmation (413) of the access control device (4) of the one or more determined access control devices is made possible, if only the access control device (4) has been determined and/or after the access control device (4) has been selected by the user (6) of the access authorisation proving device (3) from the one/the one or more determined access control devices.

4. The method according to claim 3, wherein enabling takes place following selection of a menu option by the user (6) of the access authorisation proving device, which menu option is present if at least one access control device has been determined.

5. The method according to one of claims 1 - 4, further including:
- outputting (405) a hint as to the possibility of using an access control device, if the address information of the consignment data record comprises a predefined degree of conformity with at least one address information associated with an access control device and/or with at least one address information associated with a user of an access control device.

6. The method according to one of claims 1 - 5, wherein the obtaining (402) of the information of the consignment (5) includes wirelessly, in particular optically detecting the information of the consignment (5) by the access authorisation proving device (3),
detecting an input of the information of the consignment (5) by a user (6) of the access authorisation proving device (3) by means of a user interface of the access authorisation proving device (3), or
choosing or selecting the information of the consignment (5) stored in the access authorisation proving device (3) by a user (6) of the access authorisation proving device (3).

7. The method according to one of claims 1 - 6, wherein the respective address information associated with the access control devices and stored in the access authorisation proving device and/or the address information associated respectively with one or more users (7) of the respective access control device and stored in the access authorisation proving device (3) only includes address information associated respectively with such access control devices and/or with respectively one or more users (7) of such access control devices, for which the respective address information and/or the respective address information of its respective one or more users matches the address information of at least one of the stored consignment data records according to a predefined degree of conformity.

8. The method according to claim 7, wherein the communicated access authorisation information stems from a plurality of access authorisation information stored in the access authorisation proving device, wherein this access authorisation information only includes access authorisation information from those access control devices, for which the respective address information and/or the respective address information of its respective one or more users matches the address information of at least one of the stored consignment data records according to a predefined degree of conformity.

9. The method according to one of claims 1 - 8, wherein at least two access authorisation proving devices (3) have respectively the same access authorisation information associated with an access control device stored in them.

10. The method according to one of claims 1 - 9, wherein the access authorisation information can only be communicated to the access control device (4), if a predefined degree of conformity exists between the address information of the consignment data and the address information associated with the access control device and/or with the address information associated with a user of the access control device.

11. The method according to one of claims 1 - 10, wherein the determining (407) of the one or more access control devices, the enabling of a selection (415) and/or a confirmation (413) of the one or more determined access control devices and/or the communicating (419) of the access authorisation information associated with the confirmed and/or selected access control device (4) takes place only, if the identified consignment data record indicates that the consignment (5) may, in principle, be placed into or removed from a space assigned to the access control device (4).

12. An access authorisation proving device (3), in particular a hand-held scanner, arranged for executing the method (400) according to one of claims 1 - 11.

13. Use of an access authorisation proving device (3), in particular a hand-held scanner, according to claim 12, including:
- handling the access authorisation proving device (3), so that the information of the consignment (5) is obtained by the access authorisation proving device (3),
- selecting and/or confirming an access control device (4) of the one or more access control devices determined by the access authorisation proving device, and
- placing the consignment (5) into the space assigned to the access control device (4) or removing the consignment (5) from the space, after the access authorisation proving device (3), by communicating (419) the access authorisation information to the access control device (4), has provided access to the space.

14. A system (1) including an access authorisation proving device (3) according to claim 12 and a provisioning server (2), which is arranged for executing the following step:
- providing (310) the following information:
- a plurality of consignment data records, which in particular include only consignment data records assigned to a user of an access authorisation proving device within a predefined time period, wherein each of the consignment data records includes respective address information of a respective consignment,
- respective address information associated with access control devices of a plurality of access control devices and/or respective address information associated with one or more users of the plurality of access control devices, and
- respective access authorisation information associated with the access control devices of the plurality of access control devices.

15. A computer program including program instructions, which cause a processor (21) to execute the method (400, 300) according to one of claims 1 - 11, when the computer program runs on the processor (21).

## Revendications

1. Procédé (400), mis en œuvre par un dispositif de preuve d'autorisation d'accès (3), en particulier par un scanneur à main, le procédé comprenant :
- l'obtention (402) d'une information d'un envoi (5),
- l'identification (403) d'un ensemble de données d'envoi à partir d'une pluralité d'ensembles de données d'envoi mémorisés sur le dispositif de preuve d'autorisation d'accès (3), qui comprennent en particulier seul des ensembles de données d'envoi affectés à un utilisateur du dispositif de preuve d'autorisation d'accès durant une période prédéfinie, à l'aide de l'information obtenue de l'envoi, dans lequel l'ensemble de données d'envoi comprend une information d'adresse associée à l'envoi,
- la détermination (407) d'un ou de plusieurs dispositifs de contrôle d'accès à partir d'une pluralité de dispositifs de contrôle d'accès sur la base d'un résultat d'une comparaison de l'information d'adresse de l'ensemble de données d'envoi à une information d'adresse respective associée aux dispositifs de contrôle d'accès et mémorisée sur le dispositif de preuve d'autorisation d'accès et/ou à une information d'adresse associée respectivement à un ou plusieurs utilisateurs (7) des dispositifs de contrôle d'accès respectifs et mémorisée sur le dispositif de preuve d'autorisation d'accès (3),
- le fait de permettre une sélection (415) et/ou une confirmation (413), par un utilisateur (6) du dispositif de preuve d'autorisation d'accès (3), d'un dispositif de contrôle d'accès (4) desdits un ou plusieurs dispositifs de contrôle d'accès déterminés, et
- la communication (419), en particulier la communication sans fil, d'une information d'autorisation d'accès, associée au dispositif de contrôle d'accès (4), au dispositif de contrôle d'accès (4) pour avoir un accès à un espace affecté au dispositif de contrôle d'accès (4) de sorte que l'envoi (5) peut être inséré dans l'espace ou retiré de celui-ci.

2. Procédé selon la revendication 1, dans lequel le dispositif de preuve d'autorisation d'accès (3) mémorise une information d'autorisation d'accès respectivement différente pour chaque dispositif de contrôle d'accès de la pluralité de dispositifs de contrôle d'accès ; et/ou
dans lequel un nombre desdits un ou plusieurs dispositifs de contrôle d'accès déterminés diminue selon le degré croissant de concordance entre l'information d'adresse de l'ensemble de données d'envoi et les informations d'adresse associées respectivement aux dispositifs de contrôle d'accès et/ou à leurs utilisateurs, en particulier de sorte que seulement un dispositif de contrôle d'accès (4) est déterminé lorsque l'information d'adresse associée à ce dispositif de contrôle d'accès et/ou à son ou ses utilisateurs concorde complètement avec l'information d'adresse de l'ensemble de données d'envoi.

3. Procédé selon l'une quelconque des revendications 1 à 2, dans lequel la sélection (415) du dispositif de contrôle d'accès (4) desdits un ou plusieurs dispositifs de contrôle d'accès déterminés est permise dans le cas où plus d'un dispositif de contrôle d'accès a été déterminé ; et/ou
dans lequel la confirmation (413) du dispositif de contrôle d'accès (4) desdits un ou plusieurs dispositifs de contrôle d'accès déterminés est permise dans le cas où uniquement le dispositif de contrôle d'accès (4) a été déterminé et/ou après que le dispositif de contrôle d'accès (4) a été sélectionné par l'utilisateur (6) du dispositif de preuve d'autorisation d'accès (3) parmi lesdits un ou plusieurs dispositifs de contrôle d'accès déterminés.

4. Procédé selon la revendication 3, dans lequel le fait de permettre est effectué après le choix d'une option de menu par l'utilisateur (6) du dispositif de preuve d'autorisation d'accès, qui est présente lorsqu'au moins un dispositif de contrôle d'accès a été déterminé.

5. Procédé selon l'une quelconque des revendications 1 à 4, comprenant en outre :
- la sortie (405) d'une indication sur la possibilité d'utilisation d'un dispositif de contrôle d'accès lorsque l'information d'adresse de l'ensemble de données d'envoi présente un degré prédéfini de concordance avec au moins une information d'adresse associée à un dispositif de contrôle d'accès et/ou avec au moins une information d'adresse associée à un utilisateur d'un dispositif de contrôle d'accès.

6. Procédé selon l'une quelconque des revendications 1 à 5, dans lequel l'obtention (402) de l'information de l'envoi (5) comprend la capture sans fil, en particulier optique, de l'information de l'envoi (5) par le dispositif de preuve d'autorisation d'accès (3),
la capture d'une entrée de l'information de l'envoi (5) par un utilisateur (6) du dispositif de preuve d'autorisation d'accès (3) au moyen d'une interface utilisateur du dispositif de preuve d'autorisation d'accès (3), ou
la sélection ou le choix de l'information de l'envoi (5) mémorisée sur le dispositif de preuve d'autorisation d'accès (3) par un utilisateur (6) du dispositif de preuve d'autorisation d'accès (3).

7. Procédé selon l'une quelconque des revendications 1 à 6, dans lequel l'information d'adresse respective associée aux dispositifs de contrôle d'accès et mémorisée sur le dispositif de preuve d'autorisation d'accès et/ou l'information d'adresse associée respectivement à un ou plusieurs utilisateurs (7) du dispositif de contrôle d'accès respectif et mémorisée sur le dispositif de preuve d'autorisation d'accès (3) comprend uniquement une information d'adresse associée respectivement à de tels dispositifs de contrôle d'accès et/ou uniquement une information d'adresse respective associée respectivement à un ou plusieurs utilisateurs (7) de tels dispositifs de contrôle d'accès, pour lesquels l'information d'adresse respective et/ou l'information d'adresse respective de leurs un ou plusieurs utilisateurs respectifs concorde selon un degré prédéfini de concordance avec l'information d'adresse d'au moins un des ensembles de données d'envoi mémorisés.

8. Procédé selon la revendication 7, dans lequel l'information d'autorisation d'accès communiquée provient d'une pluralité d'informations d'autorisation d'accès mémorisées sur le dispositif de preuve d'autorisation d'accès, dans lequel ces informations d'autorisation d'accès comprennent uniquement des informations d'autorisation d'accès des dispositifs de contrôle d'accès pour lesquels l'information d'adresse respective et/ou l'information d'adresse respective desdits un ou plusieurs utilisateurs concordent selon un degré prédéfini de concordance avec l'information d'adresse d'au moins un des ensembles de données d'envoi mémorisés.

9. Procédé selon l'une quelconque des revendications 1 à 8, dans lequel la même information d'autorisation d'accès associée à un dispositif de contrôle d'accès est mémorisée respectivement sur au moins deux dispositifs de preuve d'autorisation d'accès (3).

10. Procédé selon l'une quelconque des revendications 1 à 9, dans lequel l'information d'autorisation d'accès peut être communiquée uniquement au dispositif de contrôle d'accès (4) dans le cas où un degré prédéfini de concordance existe entre l'information d'adresse des données d'envoi et l'information d'adresse associée au dispositif de contrôle d'accès et/ou l'information d'adresse associée à un utilisateur du dispositif de contrôle d'accès.

11. Procédé selon l'une quelconque des revendications 1 à 10, dans lequel la détermination (407) desdits un ou plusieurs dispositifs de contrôle d'accès, le fait de permettre une sélection (415) et/ou une confirmation (413) d'un desdits un ou plusieurs dispositifs de contrôle d'accès déterminés et/ou la communication (419) d'une information d'autorisation d'accès associée au dispositif de contrôle d'accès (4) confirmé et/ou sélectionné sont effectués uniquement dans le cas où l'ensemble de données d'envoi identifié indique que l'envoi (5) peut être inséré/déposé essentiellement dans un espace affecté à un dispositif de contrôle d'accès (4) ou retiré de cet espace.

12. Dispositif de preuve d'autorisation d'accès (3), en particulier un scanneur à main, adapté pour la mise en œuvre du procédé (400) selon l'une quelconque des revendications 1 à 11.

13. Utilisation d'un dispositif de preuve d'autorisation d'accès (3), en particulier d'un scanneur à main, selon la revendication 12, comprenant :
- le maniement du dispositif de preuve d'autorisation d'accès (3) de sorte que l'information de l'envoi (5) est obtenue par le dispositif de preuve d'autorisation d'accès (3),
- la sélection et/ou la confirmation d'un dispositif de contrôle d'accès (4) desdits un ou plusieurs dispositifs de contrôle d'accès déterminés par le dispositif de preuve d'autorisation d'accès, et
- l'insertion de l'envoi (5) dans l'espace affecté au dispositif de contrôle d'accès (4) ou le retrait de l'envoi (5) de l'espace après que le dispositif de preuve d'autorisation d'accès (3) a eu un accès à l'espace par la communication (419) de l'information d'autorisation d'accès au dispositif de contrôle d'accès (4).

14. Système (1), comprenant un dispositif de preuve d'autorisation d'accès (3) selon la revendication 12 et un serveur de mise à disposition (2) qui est adapté pour mettre en œuvre les étapes suivantes :
- la mise à disposition (310) des informations suivantes :
- une pluralité d'ensembles de données d'envoi, qui comprennent en particulier seul des ensembles de données d'envoi affectés à un utilisateur d'un dispositif de preuve d'autorisation d'accès durant une période prédéfinie, dans lequel chacun des ensembles de données d'envoi comprend une information d'adresse respective d'un envoi respectif,
- des informations d'adresse respectives associées à des dispositifs de contrôle d'accès d'une pluralité de dispositifs de contrôle d'accès et/ou des informations d'adresse respectives associées à un ou plusieurs utilisateurs respectifs de la pluralité de dispositifs de contrôle d'accès, et
- des informations d'autorisation d'accès respectives associées aux dispositifs de contrôle d'accès de la pluralité de dispositifs de contrôle d'accès.

15. Programme informatique comprenant des instructions de programme (21) qui amènent la mise en œuvre du procédé (400, 300) selon l'une quelconque des revendications 1 à 11 lorsque le programme informatique se déroule sur le processeur (21).
